# EUROPEAN PATENT APPLICATION

(11) **EP 4 557 879 A1**
(43) Date of publication of application: **21.05.2025**
(21) Application number: 24212352.9
(22) Date of filing: 12.11.2024
(51) Int. Cl.: H04W 84/12, H04W 72/0457, H04W 72/121, H04W 72/23

(54) **AGGREGATED PHYSICAL LAYER PROTOCOL DATA UNIT TRANSMISSION**

(30) Priority: 16.11.2023 US 202363599980 P; 10.07.2024 US 202418769092
(71) Applicant: Apple Inc., Cupertino, CA 95014 (US)
(72) Inventor: ZHANG, Yan, Cupertino, California, 95014 (US); LEE, Wook Bong, Cupertino, California, 95014 (US); LAN, Zhou, Cupertino, California, 95014 (US); BATRA, Anuj, Cupertino, California, 95014 (US)
(74) Representative: Simmons & Simmons

(57) **Abstract**

This disclosure relates to methods for communicating aggregated physical layer protocol data units in a wireless local area network. An aggregated physical layer protocol data unit that includes multiple physical layer protocol data units may be transmitted, which may occupy a frequency channel that includes a primary subchannel and a secondary subchannel. A physical layer protocol data unit may be transmitted on the primary subchannel to a wireless device with smaller bandwidth capability than the bandwidth occupied by the aggregated physical layer protocol data unit, and another physical layer protocol data unit having the same or a different physical layer protocol data unit format may be transmitted on the secondary subchannel to an enhanced multi-link single radio secondary channel or dynamic subband operation capable wireless device with smaller bandwidth capability than the bandwidth occupied by the aggregated physical layer protocol data unit.

## Description

### TECHNICAL FIELD

The present application relates to wireless communication, including techniques and devices for transmitting and receiving aggregated physical layer protocol data units in a wireless local area network architecture.

### DESCRIPTION OF THE RELATED ART

Wireless communication systems are ubiquitous. Further, wireless communication technology has evolved from voice-only communications to also include the transmission of data, such as Internet and multimedia content.

Mobile electronic devices, or stations (STAs) or user equipment devices (UEs) may take the form of smart phones or tablets that a user typically carries. One aspect of wireless communication that may commonly be performed by mobile devices may include wireless networking, for example over a wireless local area network (WLAN), which may include devices that operate according to one or more communication standards in the IEEE 802.11 family of standards. In a wireless local area network, it may be possible that multiple generations of wireless devices are present. Accommodating such a range of devices, which may have different capabilities with respect to supported packet formats, communication bandwidths, and other features, can require trade-offs with respect to medium use efficiency, throughput, latency, and/or scheduling flexibility, among various considerations. Accordingly, improvements in the field are desired.

### SUMMARY

Embodiments are presented herein of, *inter alia*, systems, apparatuses, and methods for devices to transmit and receive aggregated physical layer protocol data units in a wireless local area network architecture.

A wireless device may include one or more antennas, one or more radios operably coupled to the one or more antennas, and a processor operably coupled to the one or more radios. The wireless device (STA) may be configured to establish a connection with an access point (AP) through a wireless local area network (WLAN) over one or multiple wireless links, or may be an access point configured to establish a connection with one or more other wireless devices through a WLAN over one or multiple wireless links. The wireless device may operate in each of the multiple wireless links using a respective radio of the one or more radios.

According to the techniques described herein, multiple physical layer protocol data units, potentially with different formats, may be transmitted together as an aggregated physical layer protocol data unit. The aggregated physical layer protocol data unit may be transmitted using different subchannels of the operating bandwidth of an access point wireless device for the different physical layer protocol data units.

By aggregating multiple physical layer protocol data units (possibly with different formats) in such a way, it may be possible for an access point to schedule wireless devices of different generations to perform uplink or downlink communication at the same time, such that operating bandwidth limitations for certain (e.g., earlier generation) devices need not limit the total operating bandwidth of the aggregated physical layer protocol data unit, and such that format limitations for certain (e.g., earlier generation) devices need not limit the physical layer protocol data unit format used by devices with the capability to use a later generation physical layer protocol data unit format (e.g., which could potentially be more efficient and/or provide other benefits relative to an earlier generation physical layer protocol data unit format).

Such an aggregated physical layer protocol data unit may be used for either or both of downlink and uplink communication, according to various embodiments. Support for such aggregation may improve the scheduling flexibility for wireless devices operating in a multi-generation wireless communication system, as well as potentially increase medium use efficiency and throughput, and decrease latency, at least in some embodiments.

The techniques described herein may be implemented in and/or used with a number of different types of devices, including but not limited to cellular phones, tablet computers, accessory and/or wearable computing devices, portable media players, access points, base stations and other network infrastructure equipment, servers, unmanned aerial vehicles, unmanned aerial controllers, automobiles and/or motorized vehicles, and any of various other computing devices.

This summary is intended to provide a brief overview of some of the subject matter described in this document. Accordingly, it will be appreciated that the above-described features are merely examples and should not be construed to narrow the scope or spirit of the subject matter described herein in any way. Other features, aspects, and advantages of the subject matter described herein will become apparent from the following Detailed Description, Figures, and Claims.

### BRIEF DESCRIPTION OF THE DRAWINGS

A better understanding of the present subject matter can be obtained when the following detailed description of the embodiments is considered in conjunction with the following drawings.
Figure 1 illustrates an example wireless communication system including a wireless device, according to some embodiments;
Figure 2 is a block diagram illustrating an example wireless device, according to some embodiments;
Figure 3 is a block diagram illustrating an example network element or access point, according to some embodiments;
Figures 4-5 are flowchart diagrams illustrating example methods for performing aggregated physical layer protocol data unit transmission and reception in a wireless local area network, according to some embodiments;
Figure 6 illustrates example aspects of possible communication between an access point device and a wireless station capable of transmitting and receiving on secondary channels via enhanced multi-link single radio secondary channel operation or dynamic subband operation, according to some embodiments;
Figure 7 illustrates an example format of a possible "Common Info" field of an enhanced multi-user request to send frame that includes an "Aggregated PPDU" subfield, according to some embodiments;
Figure 8 illustrates an example format of a possible "Common Info" field of an enhanced multi-user request to send frame or an enhanced buffer status report poll frame that includes an "Aggregated PPDU" subfield, according to some embodiments;
Figures 9-11 illustrate example details of possible downlink A-PPDU transmissions including a UHR format PPDU and an EHT format PPDU, according to some embodiments;
Figures 12-14 illustrate example details of possible downlink A-PPDU transmissions including a UHR format PPDU and an HE format PPDU, according to some embodiments;
Figures 15-17 illustrate example details of possible uplink A-PPDU transmissions including a UHR format PPDU and an EHT format PPDU, according to some embodiments;
Figures 18-20 illustrate example details of possible uplink A-PPDU transmissions including a UHR format PPDU and an HE format PPDU, according to some embodiments;
Figures 21-24 illustrate example details of possible downlink A-PPDU transmissions including an HE format PPDU and an HE format PPDU, according to some embodiments; and
Figures 25-27 illustrate example details of possible uplink A-PPDU transmissions including an HE format PPDU and an HE format PPDU, according to some embodiments.

While the features described herein are susceptible to various modifications and alternative forms, specific embodiments thereof are shown by way of example in the drawings and are herein described in detail. It should be understood, however, that the drawings and detailed description thereto are not intended to be limiting to the particular form disclosed, but on the contrary, the intention is to cover all modifications, equivalents and alternatives falling within the spirit and scope of the subject matter as defined by the appended claims.

### DETAILED DESCRIPTION

### Terminology

The following are definitions of terms used in this disclosure:
**Memory Medium** - Any of various types of non-transitory memory devices or storage devices. The term "memory medium" is intended to include any computer system memory or random access memory such as DRAM, DDR RAM, SRAM, EDO RAM, Rambus RAM, etc.; a non-volatile memory such as a Flash, magnetic media, e.g., a hard drive, or optical storage; registers, or other similar types of memory elements, etc. The term "memory medium" may include two or more memory mediums which may reside in different locations, e.g., in different computer systems that are connected over a network. The memory medium may store program instructions (e.g., embodied as computer programs) that may be executed by one or more processors.

**Carrier Medium** - a memory medium as described above, as well as a physical transmission medium, such as a bus, network, and/or other physical transmission medium that conveys signals such as electrical, electromagnetic, or digital signals.

**Computer System** - any of various types of computing or processing systems, including a personal computer system (PC), server-based computer system, wearable computer, network appliance, Internet appliance, smartphone, television system, grid computing system, or other device or combinations of devices. In general, the term "computer system" can be broadly defined to encompass any device (or combination of devices) having at least one processor that executes instructions from a memory medium.

**User Equipment (UE) (or "UE Device")** - any of various types of computer systems or devices that are mobile or portable and that perform wireless communications. Examples of UE devices include mobile telephones or smart phones (e.g., iPhone^{™}, Android^{™}-based phones), portable gaming devices, laptops, wearable devices (e.g., smart watch, smart glasses), portable Internet devices, music players, data storage devices, or other handheld devices, automobiles and/or motor vehicles, unmanned aerial vehicles (UAVs) (e.g., drones), UAV controllers (UACs), etc. In general, the term "UE" or "UE device" can be broadly defined to encompass any electronic, computing, and/or telecommunications device (or combination of devices) which is easily transported by a user and capable of wireless communication.

**Wireless Device or Station (STA)** - any of various types of computer systems or devices that perform wireless communications. A wireless device can be portable (or mobile) or may be stationary or fixed at a certain location. The terms "station" and "STA" are used similarly. A UE is an example of a wireless device.

**Communication Device** - any of various types of computer systems or devices that perform communications, where the communications can be wired or wireless. A communication device can be portable (or mobile) or may be stationary or fixed at a certain location. A wireless device is an example of a communication device. A UE is another example of a communication device.

**Base Station or Access Point (AP)** - The term "Base Station" (also called "eNB") has the full breadth of its ordinary meaning, and at least includes a wireless communication station installed at a fixed location and used to communicate as part of a wireless communication system. The term "access point" (or "AP") is typically associated with Wi-Fi based communications and is used similarly.

**Processing Element (or Processor)** - refers to various elements or combinations of elements that are capable of performing a function in a device, e.g., in a communication device or in a network infrastructure device. Processors may include, for example: processors and associated memory, circuits such as an ASIC (Application Specific Integrated Circuit), portions or circuits of individual processor cores, entire processor cores, processor arrays, programmable hardware devices such as a field programmable gate array (FPGA), and/or larger portions of systems that include multiple processors, as well any of various combinations of the above.

**Automatically** - refers to an action or operation performed by a computer system (e.g., software executed by the computer system) or device (e.g., circuitry, programmable hardware elements, ASICs, etc.), without user input directly specifying or performing the action or operation. Thus, the term "automatically" is in contrast to an operation being manually performed or specified by the user, where the user provides input to directly perform the operation. An automatic procedure may be initiated by input provided by the user, but the subsequent actions that are performed "automatically" are not specified by the user, i.e., are not performed "manually", where the user specifies each action to perform. For example, a user filling out an electronic form by selecting each field and providing input specifying information (e.g., by typing information, selecting check boxes, radio selections, etc.) is filling out the form manually, even though the computer system must update the form in response to the user actions. The form may be automatically filled out by the computer system where the computer system (e.g., software executing on the computer system) analyzes the fields of the form and fills in the form without any user input specifying the answers to the fields. As indicated above, the user may invoke the automatic filling of the form, but is not involved in the actual filling of the form (e.g., the user is not manually specifying answers to fields but rather they are being automatically completed). The present specification provides various examples of operations being automatically performed in response to actions the user has taken.

**IEEE 802.11** - refers to technology based on IEEE 802.11 wireless standards such as 802.11a, 802.11.b, 802.11g, 802.11n, 802.11-2012, 802.11ac, 802.11ad, 802.11ax, 802.11ay, 802.11be, and/or other IEEE 802.11 standards. IEEE 802.11 technology may also be referred to as "Wi-Fi" or "wireless local area network (WLAN)" technology.

**Configured to** - Various components may be described as "configured to" perform a task or tasks. In such contexts, "configured to" is a broad recitation generally meaning "having structure that" performs the task or tasks during operation. As such, the component can be configured to perform the task even when the component is not currently performing that task (e.g., a set of electrical conductors may be configured to electrically connect a module to another module, even when the two modules are not connected). In some contexts, "configured to" may be a broad recitation of structure generally meaning "having circuitry that" performs the task or tasks during operation. As such, the component can be configured to perform the task even when the component is not currently on. In general, the circuitry that forms the structure corresponding to "configured to" may include hardware circuits.

Various components may be described as performing a task or tasks, for convenience in the description. Such descriptions should be interpreted as including the phrase "configured to." Reciting a component that is configured to perform one or more tasks is expressly intended not to invoke 35 U.S.C. § 112(f), interpretation for that component.

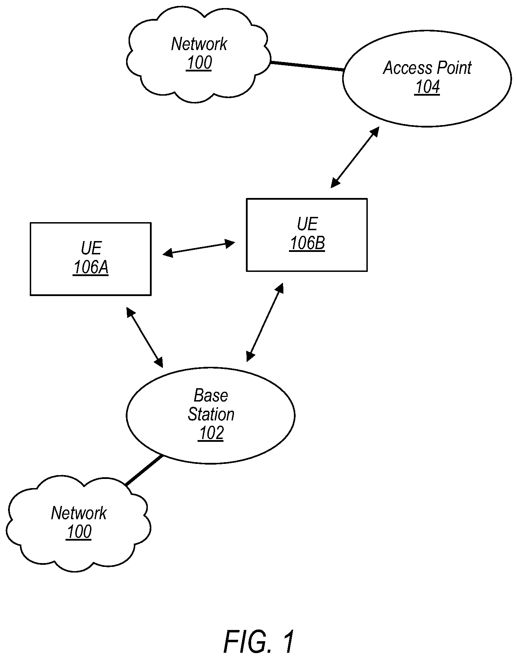

### Figures 1-2 - Wireless Communication System

Figure 1 illustrates an example of a wireless communication system. It is noted that Figure 1 represents one possibility among many, and that features of the present disclosure may be implemented in any of various systems, as desired. For example, embodiments described herein may be implemented in any type of wireless device. The wireless embodiment described below is one example embodiment.

As shown, the exemplary wireless communication system includes an access point (AP) 102, which communicates over a transmission medium with one or more wireless devices 106A, 106B, etc. Wireless devices 106A and 106B may be user devices, such as stations (STAs), non-AP STAs, or WLAN devices.

The STA 106 may be a device with wireless network connectivity such as a mobile phone, a hand-held device, a wearable device, a computer or a tablet, an unmanned aerial vehicle (UAV), an unmanned aerial controller (UAC), an automobile, or virtually any type of wireless device. The STA 106 may include a processor (processing element) that is configured to execute program instructions stored in memory. The STA 106 may perform any of the method embodiments described herein by executing such stored instructions. Alternatively, or in addition, the STA 106 may include a programmable hardware element such as an FPGA (field-programmable gate array), an integrated circuit, and/or any of various other possible hardware components that are configured to perform (e.g., individually or in combination) any of the method embodiments described herein, or any portion of any of the method embodiments described herein.

The AP 102 may be a stand-alone AP or an enterprise AP, and may include hardware that enables wireless communication with the STA devices 106A and 106B. The AP 102 may also be equipped to communicate with a network 100 (e.g., a WLAN, an enterprise network, and/or another communication network connected to the Internet, among various possibilities). Thus, the AP 102 may facilitate communication among the STA devices 106 and/or between the STA devices 106 and the network 100. In other implementations, AP 102 can be configured to provide communications over one or more wireless technologies, such as any, any combination of, or all of 802.11 a, b, g, n, ac, ad, ax, ay, be and/or other 802.11 versions, or a cellular protocol, such as 5G or LTE, including in an unlicensed band (e.g., LAA, NR-U).

The communication area (or coverage area) of the AP 102 may be referred to as a basic service area (BSA) or cell. The AP 102 and the STAs 106 may be configured to communicate over the transmission medium using any of various radio access technologies (RATs) or wireless communication technologies, such as Wi-Fi, LTE, LTE-Advanced (LTE-A), 5G NR, ultra-wideband (UWB), etc.

AP 102 and other similar access points (not shown) operating according to one or more wireless communication technologies may thus be provided as a network, which may provide continuous or nearly continuous overlapping service to STA devices 106A-B and similar devices over a geographic area, e.g., via one or more communication technologies. A STA may roam from one AP to another directly, or may transition between APs and cellular network cells.

Note that at least in some instances a STA device 106 may be capable of communicating using any of multiple wireless communication technologies. For example, a STA device 106 might be configured to communicate using one or more of Wi-Fi, LTE, LTE-A, SGNR, Bluetooth, UWB, one or more satellite systems, etc. Other combinations of wireless communication technologies (including more than two wireless communication technologies) are also possible. Likewise, in some instances a STA device 106 may be configured to communicate using only a single wireless communication technology.

As shown, the exemplary wireless communication system also can include an access point (AP) 104, which communicates over a transmission medium with the wireless device 106B. The AP 104 also provides communicative connectivity to the network 100. Thus, according to some embodiments, wireless devices may be able to connect to either or both of the AP 102 (or a cellular base station) and the access point 104 (or another access point) to access the network 100. For example, a STA may roam from AP 102 to AP 104 based on one or more factors, such as coverage, interference, and capabilities. Note that it may also be possible for the AP 104 to provide access to a different network (e.g., an enterprise Wi-Fi network, a home Wi-Fi network, etc.) than the network to which the AP 102 provides access.

The STAs 106A and 106B may include handheld devices such as smart phones or tablets, wearable devices such as smart watches or smart glasses, and/or may include any of various types of devices with cellular communications capability. For example, one or more of the STAs 106A and/or 106B may be a wireless device intended for stationary or nomadic deployment such as an appliance, measurement device, control device, etc.

The STA 106B may also be configured to communicate with the STA 106A. For example, the STA 106A and STA 106B may be capable of performing direct device-to-device (D2D) communication. In some embodiments, such direct communication between STAs may also or alternatively be referred to as peer-to-peer (P2P) communication. The direct communication may be supported by the AP 102 (e.g., the AP 102 may facilitate discovery, among various possible forms of assistance), or may be performed in a manner unsupported by the AP 102. Such P2P communication may be performed using 3GPP-based D2D communication techniques, Wi-Fi-based P2P communication techniques, UWB, BT, and/or any of various other direct communication techniques, according to various embodiments.

The STA 106 may include one or more devices or integrated circuits for facilitating wireless communication, potentially including a Wi-Fi modem, cellular modem, and/or one or more other wireless modems. The wireless modem(s) may include one or more processors (processor elements) and various hardware components as described herein. The STA 106 may perform any of (or any portion of) the method embodiments described herein by executing instructions on one or more programmable processors. For example, the STA 106 may be configured to perform techniques for generating and communicating aggregated physical layer protocol data units in a wireless communication system, such as according to the various embodiments described herein. Alternatively, or in addition, the one or more processors may be one or more programmable hardware elements such as an FPGA (field-programmable gate array), application-specific integrated circuit (ASIC), or other circuitry, that is configured to perform any of the method embodiments described herein, or any portion of any of the method embodiments described herein. The wireless modem(s) described herein may be used in a STA device as defined herein, a wireless device as defined herein, or a communication device as defined herein. The wireless modem described herein may also be used in an AP, a base station, a pico cell, a femto cell, or other similar network side device.

The STA 106 may include one or more antennas for communicating using two or more wireless communication protocols or radio access technologies. In some embodiments, the STA 106 can be configured to communicate using a single shared radio. The shared radio may couple to a single antenna, or may couple to multiple antennas (e.g., for MIMO) for performing wireless communications. Alternatively, the STA 106 may include two or more radios, each of which may be configured to communicate via a respective wireless link. Other configurations are also possible.

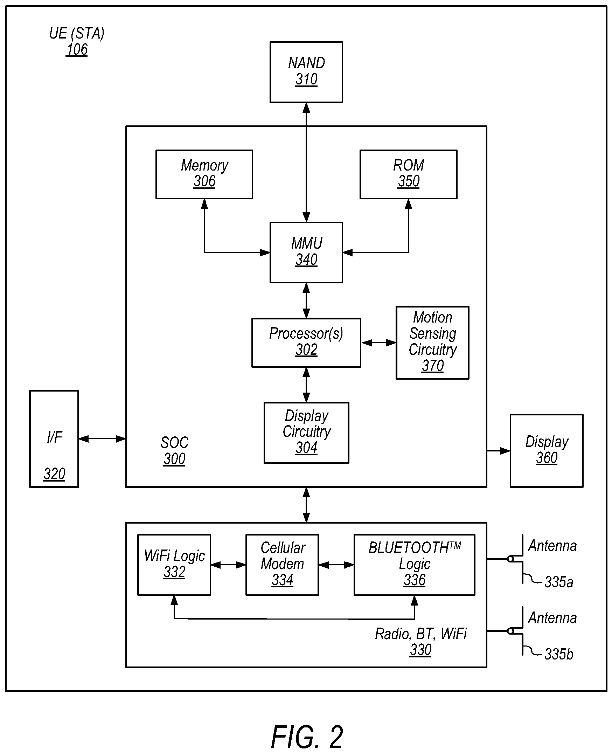

### Figure 2 - Example Block Diagram of a STA Device

Figure 2 illustrates one possible block diagram of a STA device, such as STA device 106. In some instances, the STA 106 may alternatively be referred to as a UE 106. STA 106 also may be referred to as a non-AP STA 106. As shown, the STA device 106 may include a system on chip (SOC) 300, which may include one or more portions configured for various purposes. Some or all of the various illustrated components (and/or other device components not illustrated, e.g., in variations and alternative arrangements) may be "communicatively coupled" or "operatively coupled", which terms may be taken herein to mean components that can communicate, directly or indirectly, when the device is in operation.

As shown, the SOC 300 may include processor(s) 302 which may execute program instructions for the STA device 106, and display circuitry 304 which may perform graphics processing and provide display signals to the display 360. The SOC 300 may also include motion sensing circuitry 370 which may detect motion of the STA 106, for example using a gyroscope, accelerometer, and/or any of various other motion sensing components. The processor(s) 302 may also be coupled to memory management unit (MMU) 340, which may be configured to receive addresses from the processor(s) 302 and translate those addresses to locations in memory (e.g., memory 306, read only memory (ROM) 350, flash memory 310). The MMU 340 may be configured to perform memory protection and page table translation or set up. In some embodiments, the MMU 340 may be included as a portion of the processor(s) 302.

As shown, the SOC 300 may be coupled to various other circuits of the STA 106. For example, the STA 106 may include various types of memory (e.g., including NAND flash 310), a connector interface 320 (e.g., for coupling to a computer system, dock, charging station, etc.), the display 360, and wireless communication circuitry 330 (e.g., for LTE, LTE-A, 5GNR, Bluetooth, Wi-Fi, NFC, GPS, UWB, etc.).

The STA 106 may include at least one antenna, and in some embodiments multiple antennas 335a and 335b, for performing wireless communication with base stations and/or other devices. For example, the STA 106 may use antennas 335a and 335b to perform the wireless communication. As noted above, the STA 106 may in some embodiments be configured to communicate wirelessly using a plurality of wireless communication standards or radio access technologies (RATs).

The wireless communication circuitry 330 may include a Wi-Fi modem 332, a cellular modem 334, and a Bluetooth modem 336. The Wi-Fi modem 332 is for enabling the STA 106 to perform Wi-Fi or other WLAN communications on an 802.11 network. The Bluetooth modem 336 is for enabling the UE device 106 to perform Bluetooth communications. The cellular modem 334 may be a cellular modem capable of performing cellular communication according to one or more cellular communication technologies, e.g., in accordance with one or more 3GPP specifications.

As described herein, STA 106 may include hardware and software components for implementing embodiments of this disclosure. For example, one or more components of the wireless communication circuitry 330 (e.g., Wi-Fi modem 332, cellular modem 334, BT modem 336) of the STA 106 may be configured to implement part or all of the methods for aggregated physical layer protocol data unit use described herein, e.g., by a processor executing program instructions stored on a memory medium (e.g., a non-transitory computer-readable memory medium), a processor configured as an FPGA (Field Programmable Gate Array), and/or using dedicated hardware components, which may include an ASIC (Application Specific Integrated Circuit).

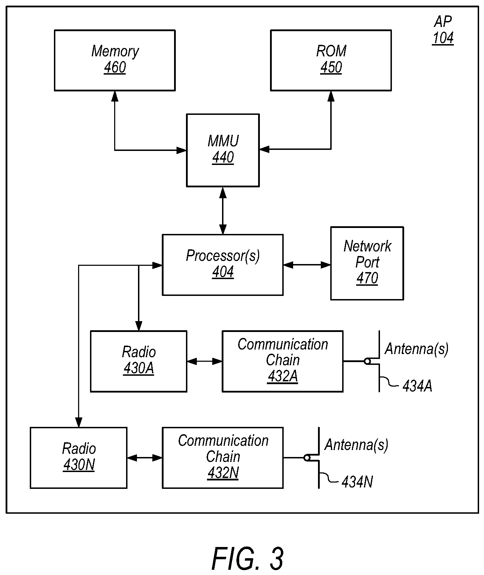

### Figure 3 - Block Diagram of an Access Point

Figure 3 illustrates an example block diagram of an access point (AP) 104, according to some embodiments. In some instances (e.g., in an 802.11 communication context), the AP 104 may also be referred to as a station (STA), and possibly more particularly as an AP STA. It is noted that the AP of Figure 3 is merely one example of a possible access point. As shown, AP 104 may include processor(s) 404 which may execute program instructions for the AP 104. The processor(s) 404 may also be coupled to memory management unit (MMU) 440, which may be configured to receive addresses from the processor(s) 404 and translate those addresses to locations in memory (e.g., memory 460 and read only memory (ROM) 450) or to other circuits or devices.

The AP 104 may include at least one network port 470. The network port 470 may be configured to couple to a telephone network and provide a plurality of devices, such as STA devices 106, with access to the telephone network as described above in Figure 1.

The network port 470 (or an additional network port) may also or alternatively be configured to couple to a cellular network, e.g., a core network of a cellular service provider. The core network may provide mobility related services and/or other services to a plurality of devices, such as UE devices 106. In some cases, the network port 470 may couple to a telephone network via the core network, and/or the core network may provide a telephone network (e.g., among other UE devices serviced by the cellular service provider).

The AP 104 may include one or more radios 430A-430N, each of which may be coupled to a respective communication chain and at least one antenna 434, and possibly multiple antennas. The antenna(s) 434 may be configured to operate as a wireless transceiver and may be further configured to communicate with UE devices 106/107 via radio 430. The antenna(s) 434A-N communicate with their respective radios 430A-N via communication chains 432A-N. Communication chains 432 may be receive chains, transmit chains, or both. The radios 430A-N may be configured to communicate in accordance with various wireless communication standards, including, but not limited to, LTE, LTE-A, 5G NR, UWB, Wi-Fi, BT, etc. The AP 104 may be configured to operate on multiple wireless links using the one or more radios 430A-N, wherein each radio is used to operate on a respective wireless link.

The AP 104 may be configured to communicate wirelessly using multiple wireless communication standards. In some instances, the AP 104 may include multiple radios, which may enable the network entity to communicate according to multiple wireless communication technologies. For example, as one possibility, the AP 104 may include an LTE or 5G NR radio for performing communication according to LTE as well as a Wi-Fi radio for performing communication according to Wi-Fi. In such a case, the AP 104 may be capable of operating as both an LTE base station and a Wi-Fi access point. As another possibility, the AP 104 may include a multi-mode radio which is capable of performing communications according to any of multiple wireless communication technologies (e.g., 5G NR and Wi-Fi, 5G NR and LTE, etc.). As still another possibility, the AP 104 may be configured to act exclusively as a Wi-Fi access point, e.g., without cellular communication capability.

As described further herein, the AP 104 may include hardware and software components for implementing or supporting implementation of features described herein, such as generating and communicating aggregated physical layer protocol data units in a wireless communication system. The processor 404 of the AP 104 may be configured to implement or support implementation of part or all of the methods described herein, e.g., by executing program instructions stored on a memory medium (e.g., a non-transitory computer-readable memory medium) to operate multiple wireless links using multiple respective radios. Alternatively, the processor 404 may be configured as a programmable hardware element, such as an FPGA (Field Programmable Gate Array), or ASIC (Application Specific Integrated Circuit), or a combination thereof. Alternatively (or in addition) the processor 404 of the AP 104, in conjunction with one or more of the other components 430, 432, 434, 440, 450, 460, 470 may be configured to implement or support implementation of part or all of the features described herein.

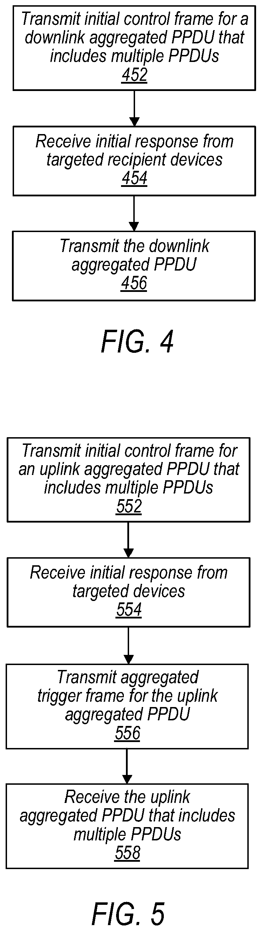

### Figures 4-5 - Aggregated Physical Layer Protocol Data Unit Use Flowcharts

Wi-Fi communication systems may include multiple generations of wireless devices, for example potentially including devices associated with 6^{th} generation Wi-Fi ("Wi-Fi 6," "Wi-Fi 6E," "high efficiency," or "HE" devices, e.g., including those that operate based on IEEE 802.11ax), devices associated with 7^{th} generation Wi-Fi ("Wi-Fi 7," "extremely high throughput" or "EHT" devices, e.g., including those that operate based on IEEE 802.11be), and/or devices associated with 8^{th} generation Wi-Fi ("Wi-Fi 8," "ultra high reliability" or "UHR" devices, e.g., including those that operate based on the specifications established by the UHR IEEE 802.11 working group), among various possibilities.

Potential differences in compatibility and capabilities in a multi-generation system may lead to lower medium efficiency. For example, if the bandwidth capability of an earlier generation ("legacy") wireless device is smaller than the operating bandwidth of an associated access point wireless device, one possibility may be that some of that operating bandwidth (e.g., a secondary channel) is unused when communication with the legacy device is performed.

Providing techniques that can make more efficient use of the wireless medium in a multi-generation wireless communication system may thus have significant benefits, at least in some instances. One opportunity for providing such techniques may include supporting the use of aggregated physical layer (PHY) protocol data unit transmission, in which multiple PHY protocol data units (PPDUs), which can potentially have different formats (e.g., associated with different wireless communication technology generations), can be included in the same transmission.

Accordingly, Figures 4-5 are flowchart diagrams illustrating methods for supporting transmission and reception of downlink and uplink aggregated downlink physical layer protocol data units (A-PPDUs) in a WLAN, according to some embodiments. In various embodiments, some of the elements of the methods shown may be performed concurrently, in a different order than shown, may be substituted for by other method elements, or may be omitted. Additional method elements may also be performed as desired.

Aspects of the methods of Figures 4-5 may be implemented by a wireless device, such as the AP 104 or UE 106 illustrated in and described with respect to Figures 1-3, or more generally in conjunction with any of the computer circuitry, systems, devices, elements, or components shown in the Figures, among others, as desired. For example, a processor (and/or other hardware) of such a device may be configured to cause the device to perform any combination of the illustrated method elements and/or other method elements.

Note that while at least some elements of the methods of Figures 4-5 are described in a manner relating to the use of communication techniques and/or features associated with IEEE 802.11 specification documents, such description is not intended to be limiting to the disclosure, and aspects of the methods of Figures 4-5 may be used in any suitable wireless communication system, as desired. As shown, the methods may operate as follows.

At least two wireless devices (which may also be referred to herein as "wireless stations," "stations," or "STAs") may establish a wireless association. The wireless association(s) may be established using Wi-Fi, wireless communication techniques that are based at least in part on Wi-Fi, and/or any of various other wireless communication technologies, according to various embodiments. For example, an access point (AP) wireless device may provide beacon transmissions including information for associating with the AP wireless device, and one or more other wireless devices (e.g., non-AP wireless devices) may request to associate with the AP wireless device using the information provided in the beacon transmissions, as one possibility. Variations and/or other techniques for establishing an association are also possible.

The AP wireless device may provide wireless local area network functionality to associated wireless devices, at least according to some embodiments. As part of the wireless local area network functionality, it may be possible for wireless devices to contend for medium access and perform wireless transmissions on one or more wireless communication channels (each of which could possibly include multiple sub-channels) according to general provisions of the wireless communication technology in use by the wireless local area network (e.g., Wi-Fi, as one possibility) and/or network specific parameters configured by the AP wireless device.

The AP wireless device may perform a downlink transmission to multiple recipient wireless devices with which it has formed associations. At least according to some embodiments, the AP wireless device may contend for medium access (e.g., to avoid collisions and potential interference), and, once medium access is obtained transmit an initial control frame (ICF) to the destination wireless devices (452). After transmitting the ICF and receiving initial response frames (IRs) (454) from two or more destination wireless devices, a downlink aggregated physical layer protocol data unit (A-PPDU) may be transmitted to the destination wireless devices (456). The downlink A-PPDU may include physical layer signaling (e.g., including a preamble for frame detection, timing and frequency synchronization, channel estimation, etc., and header information indicating packet configuration, format, data rates, channel occupation time, and/or other control information) and data (which may in turn include one or more higher layer packets, such as media access control (MAC) protocol data units (MPDUs).

The downlink A-PPDU may be aggregated in the sense of having multiple frequency domain multiplexed PPDUs, which may have different formats. For example, the different PPDUs may be generated based on different generations of a wireless communication technology (e.g., Wi-Fi, as one possibility), and may for example have at least some differences in PHY signaling fields used for the different PPDUs. Alternatively, in some instances, the different PPDUs may have the same format. In some instances, the different PPDUs may be transmitted on different subchannels of a frequency channel on which the overall downlink A-PPDU is transmitted; in other words, the PPDUs of the A-PPDU may be multiplexed in the frequency domain. For example, the downlink A-PPDU may occupy a frequency channel that includes a primary subchannel and a secondary subchannel, and a first PPDU (e.g., having a first PPDU format) may be transmitted on the primary subchannel, while a second PPDU (e.g., having a second PPDU format, which can be the same as or different than the first PPDU format) may be transmitted on the secondary subchannel. As one such possibility, the first PPDU format could include an HE format or an EHT format, while the second PPDU format could include an HE format or a UHR format. For example, the HE format could include an HE MU PPDU (e.g., HE OFDMA transmission or HE MU-MIMO transmission), the EHT format could include an EHT MU PPDU (e.g., EHT SU transmission, EHT OFDMA transmission or EHT MU-MIMO transmission), the UHR format could include a UHR MU PPDU (e.g., UHR SU transmission, UHR OFDMA transmission or UHR MU-MIMO transmission), etc. As another possibility, the first PPDU format could include an HE format, while the second PPDU format could also include an HE format, e.g., to extend the bandwidth applicable to HE PPDU, which may be limited to 160 MHz. For example, the HE format could include an HE SU PPDU and/or HE MU PPDU (e.g., HE SU transmission, HE OFDMA transmission or HE MU-MIMO transmission).

Performing such a downlink A-PPDU transmission may allow an AP wireless device to transmit data to (e.g., earlier generation) wireless devices with smaller bandwidth capability than the AP wireless device as well as (e.g., newer generation) wireless devices with smaller bandwidth capability than AP that can dynamically operate on the secondary subchannels of AP operating bandwidth, or (e.g., newer generation) wireless devices with the same bandwidth as the AP wireless device, and potentially in such a manner that newer generation devices can benefit from their newer generation features. For example, the first PPDU of the downlink A-PPDU transmission could be transmitted to one or more wireless devices with smaller bandwidth capability than the full bandwidth of the frequency channel occupied by the downlink A-PPDU on the primary subchannel, while the second PPDU of the downlink A-PPDU transmission could be transmitted to one or more devices with smaller bandwidth capability than the bandwidth of the frequency channel occupied by the downlink A-PPDU but capable of eMLSR-SC operation/DSO (e.g., one or more UHR STAs with EMI,SR-SC operation/DSO capability), or by one or more wireless devices with as much bandwidth capability as the bandwidth of the frequency channel occupied by the downlink A-PPDU.

In some embodiments, enhanced multi-link single radio secondary channel (EMI,SR-SC) operation, and/or Dynamic Subband Operation (DSO), capable devices may use that capability to operate on the secondary subchannel provided by the AP wireless device and to receive the second PPDU. For example, in some embodiments, the AP wireless device may transmit an initial control frame to recipient wireless devices for the downlink A-PPDU, which may include resource assignment information for the recipient wireless devices. This resource assignment information could, for example, indicate a resource assignment on the primary subchannel to one or more STAs (e.g., potentially including STAs that could only handle the operating bandwidth of the primary subchannel, in some instances) and a resource assignment on the secondary subchannel to one or more other STAs (e.g., potentially including STAs that can handle the full operating bandwidth of the AP wireless device and that support EMI,SR-SC operation (and/or DSO), in some instances).

The initial control frame (ICF) may be communicated using non-high throughput (non-HT) duplication (DUP) across the operating bandwidth of the AP wireless device, at least in some embodiments. As this may include the ICF being repeated in each 20 MHz of the AP operating bandwidth, this may help enable wireless devices of different generations, including those with smaller operating bandwidth capability than the operating bandwidth of the AP wireless device, to successfully receive and decode the ICF. In some embodiments, an enhanced multi-user request to send (eMU-RTS) frame may be used as the ICF for the downlink A-PPDU. In some embodiments, an enhanced Buffer Status Report Poll (eBSRP) may be used as the ICF for downlink A-PPDU.

In some embodiments, the ICF may include an indication that the downlink A-PPDU scheduled to follow the ICF includes multiple PPDUs, and possibly further that the multiple PPDUs have same or different formats. As one such possibility, an "Aggregated PPDU" subfield may be included in a "Common Info" field of an eMU-RTS frame or an eBSRP frame, which could provide a one-bit indicator of whether the ICF is associated with an A-PPDU. Other ways of indicating that the downlink A-PPDU scheduled to follow the ICF includes multiple PPDUs are also possible.

At least in some embodiments, the recipient wireless devices may respond to the ICF, e.g., to confirm reception of the ICF and availability to receive the following downlink A-PPDU; for example, a clear-to-send (CTS) frame may be provided by each of the recipient wireless devices (e.g., on their corresponding assigned resource allocation) in response to an eMU-RTS frame, or a buffer status report (BSR) frame may be provided by each of the recipient wireless devices (e.g., on their corresponding assigned resource allocation) in response to an eBSRP frame. The downlink A-PPDU may be transmitted by the AP wireless device after reception of this initial response (IR) frame (e.g., the CTS or BSR).

Note that the AP wireless device may modify one or more PHY signaling elements for one or more of the PPDUs included in the downlink A-PPDU to facilitate effective reception of the A-PPDU by all recipient devices and/or to improve co-existence on the wireless medium, at least in some instances. For example, in a scenario in which the first PPDU is an HE MU PPDU and the second PPDU is a UHR MU PPDU, the L-SIG field of the UHR MU PPDU may be set to the same value as that set in the L-SIG field of the HE MU PPDU. This may facilitate correct decoding of the L-SIG and calculation of the correct transmission time of the A-PPDU by other wireless devices sharing the wireless medium with the AP wireless device and the recipient wireless devices, at least in some embodiments. The UHR STA(s) receiving the A-PPDU may be able to determine, based on the indication in the ICF that multiple PPDU formats are included in the downlink A-PPDU, to bypass checking the PPDU format using the L-SIG length field, and may for example instead determine the PPDU format based on "PHY Version Identifier" information in a U-SIG field, at least as one possibility.

While the PHY signaling may differ between the different MU PPDUs, e.g., based on their different PHY formats, it may be the case that the number of OFDM symbols in each corresponding PHY preamble field and in the PHY data field may be the same for the PPDUs included in the A-PPDU respectively, e.g., to support orthogonal transmission between the primary subchannel and the secondary subchannel. To accomplish this, the AP wireless device may accordingly set/select the same values for certain fields/subfields of the PPDUs in the A-PPDU based on the PPDUs inclusion in an A-PPDU transmission.

As noted herein, it can also potentially be possible that the multiple PPDUs of the A-PPDU have the same format; for example, both the first PPDU and the second PPDU could use an HE PPDU format, in some instances. This approach could be used, for example, in a scenario in which a receiver on a primary channel is capable of receiving an HE PPDU but not a UHR PPDU, and a receiver on a secondary channel is capable of receiving an HE PPDU and a UHR PPDU, in some embodiments. For example, it may be possible that PHY signaling element modifications are not necessary to facilitate effective reception of the A-PPDU by all recipient devices when the PPDUs in the A-PPDU have the same format, which can potentially reduce the complexity cost of implementing such an approach while still offering significantly increased potential throughput in comparison to a non-aggregated PPDU transmission approach, at least according to some embodiments.

The recipient wireless devices for the A-PPDU may receive their corresponding PPDU portions of the A-PPDU using their operating bandwidth. For a wireless device with smaller operating bandwidth than the bandwidth occupied by the A-PPDU and with a resource allocation on the primary subchannel, this may include receiving only the first PPDU on the primary subchannel, in some embodiments. For a wireless device with a smaller operating bandwidth than bandwidth occupied by the A-PPDU but capable of eMLSR-SC operation (and/or DSO), or a wireless device with as much operating bandwidth as the bandwidth occupied by the A-PPDU and with a resource allocation on the secondary subchannel, this may include receiving A-PPDU and extracting the second PPDU (or the portion thereof directed to the wireless device) on the secondary subchannel, in some embodiments.

In some embodiments, an AP wireless device may also or alternatively be capable of soliciting and receiving an uplink A-PPDU from multiple wireless devices. The uplink A-PPDU may similarly occupy a frequency channel that includes a primary subchannel and a secondary subchannel, such that a first PPDU having a first PPDU format can be received on the primary subchannel, while a second PPDU having a second PPDU format can be received on the secondary subchannel, at least according to some embodiments. As one such possibility, the first PPDU format could include an HE format or an EHT format, while the second PPDU format could include an HE format or a UHR format.

Such an AP wireless device may, similar to the downlink A-PPDU scenario, transmit an ICF such as an eMU-RTS or eBSRP for the uplink A-PPDU (552), which may indicate resource assignments for the uplink A-PPDU and possibly indicate that the uplink A-PPDU includes multiple PPDUs, and possibly further that the multiple PPDUs have same or different formats (e.g., similarly using an "Aggregated PPDU" subfield of a "Common Info" field of the eMU-RTS frame or eBSPR frame, at least as one possibility). The corresponding wireless devices may respond (e.g., with CTS frames or BSR frames) to the ICF (554), following which the AP wireless device may transmit a trigger frame (556) having one Common info field, possibly one Special User info field (e.g., information -indicating different variants of User info fields), and multiple User info fields, and each user info field may be an HE variant, EHT variant or UHR variant User info field corresponding to solicitation of an HE, EHT or UHR uplink PPDU.

Based on the aggregated trigger frame, the solicited uplink PPDUs may be transmitted by the corresponding wireless devices. Transmission of these uplink PPDUs may effectively form the uplink A-PPDU, which may be received by the AP wireless device (558).

Note that the UHR wireless devices may modify one or more PHY signaling elements for the UHR PPDUs included in the uplink A-PPDU to facilitate effective reception of the A-PPDU by the AP wireless device and/or to improve co-existence on the wireless medium, at least in some instances. For example, in a scenario in which the first PPDU is an HE TB PPDU and the second PPDU is a UHR TB PPDU, the L-SIG field of the UHR TB PPDU may be set to the same value as that set in the L-SIG field of the HE TB PPDU. This may facilitate correct decoding of the L-SIG and calculation of the correct transmission time of the A-PPDU by other wireless devices sharing the wireless medium with the transmitting wireless devices and the AP wireless device, at least in some embodiments. The UHR STA(s) transmitting the UHR TB PPDU in the A-PPDU may be able to determine, based on the indication in the ICF that multiple PPDU formats are included in the uplink A-PPDU, to modify the "LENGTH" subfield in the L-SIG field to be the same as the value set in HE TB PPDU in the A-PPDU, at least as one possibility.

While the PHY signaling may differ between the different TB PPDUs, e.g., based on their different PHY formats, it may be the case that the number of OFDM symbols in each corresponding PHY preamble field and in the PHY data field may be the same for the PPDUs included in the A-PPDU respectively, e.g., to support orthogonal transmission between the primary subchannel and the secondary subchannel. To accomplish this, the AP wireless device may accordingly set/select the same values for certain fields/subfields of the PPDUs in the A-PPDU based on the PPDUs inclusion in an A-PPDU transmission.

As in the downlink A-PPDU case, it can also potentially be possible that the multiple PPDUs of an uplink A-PPDU have the same format; for example, both the first PPDU and the second PPDU could use an HE PPDU format, in some instances.

Thus, similar to the downlink A-PPDU scenario, it may be possible that the uplink A-PPDU scenario can support simultaneous communication of PPDUs both from earlier generation STAs that support less than the full operating bandwidth of the AP wireless device as well as later generation STAs that support the full operating bandwidth of the AP wireless device, e.g., using different PPDU formats that can potentially include the latest generation PPDU format supported for each of the respective wireless devices, or possibly using the same PPDU format, which can be a PPDU format that is supported by all of the wireless devices involved in the A-PPDU transmission. For example, the first PPDU may be transmitted on the primary subchannel by one or more wireless devices with smaller bandwidth capability than the bandwidth of the frequency channel occupied by the uplink A-PPDU (e.g., one or more HE or EHT STAs), while the second PPDU may be transmitted on the secondary subchannel by one or more wireless devices with smaller bandwidth capability than the bandwidth of the frequency channel occupied by the uplink A-PPDU but capable of eMLSR-SC operation/DSO (e.g., one or more UHR STAs with EMI,SR-SC operation/DSO capability), or by one or more wireless devices with as much bandwidth capability as the bandwidth of the frequency channel occupied by the uplink A-PPDU.

Thus, according to the methods of Figures 4-5, it may be possible to communicate multiple frequency domain multiplexed PPDUs in an aggregated transmission, which may potentially improve scheduling flexibility, medium use efficiency, and throughput, and/or reduce latency, in a multi-generation wireless communication system, among other possible benefits, at least according to some embodiments.

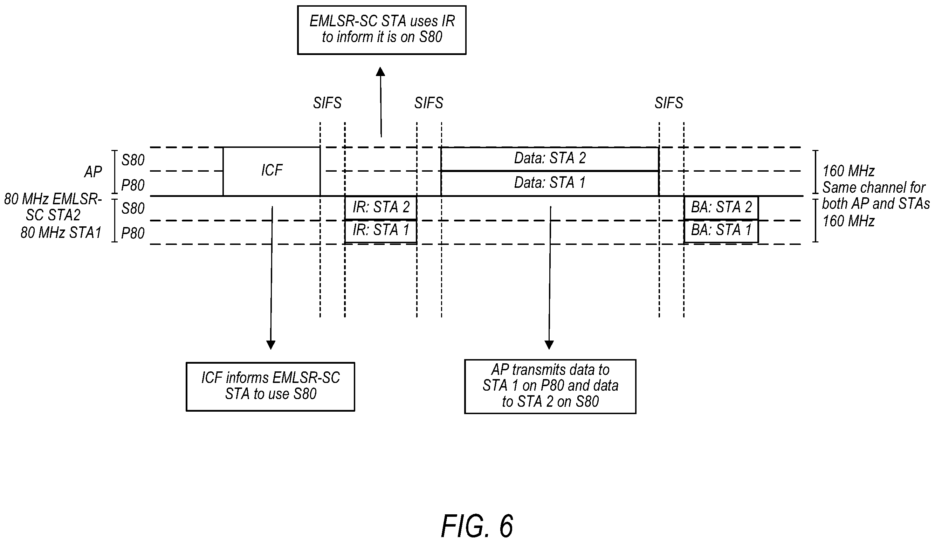

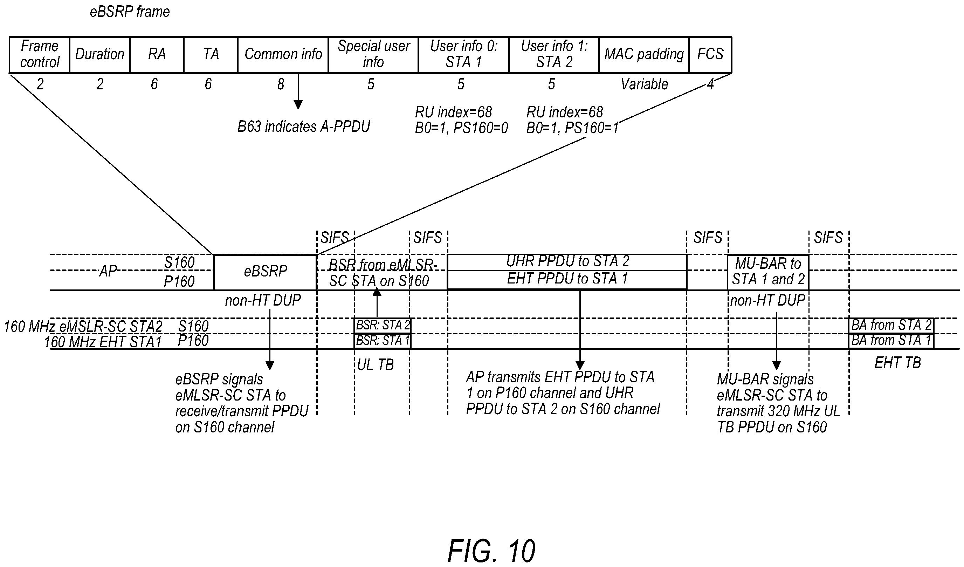

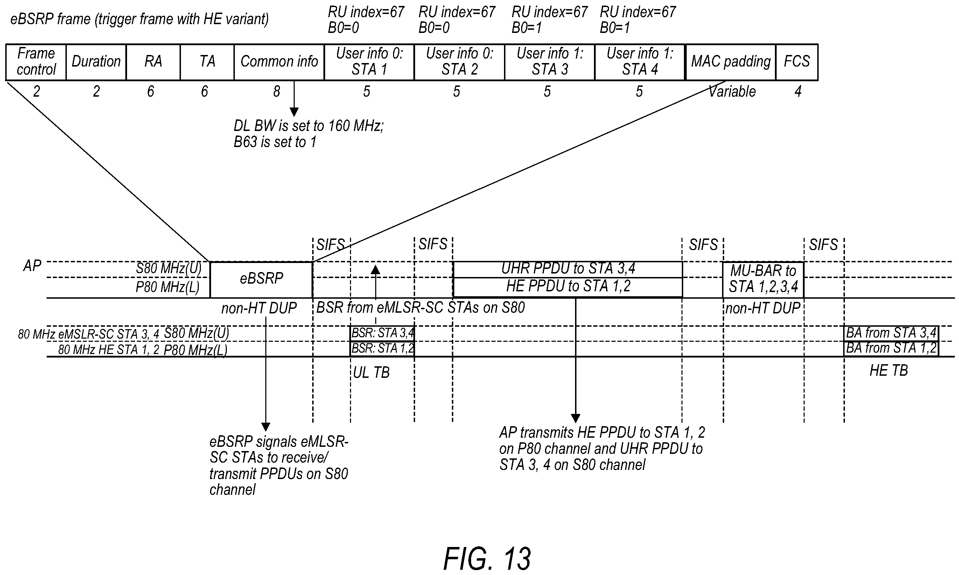

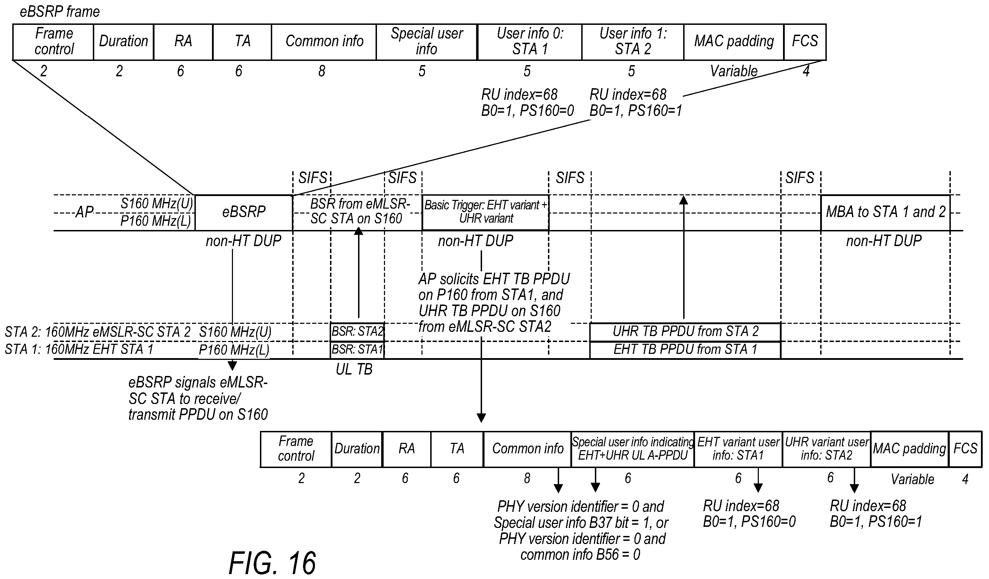

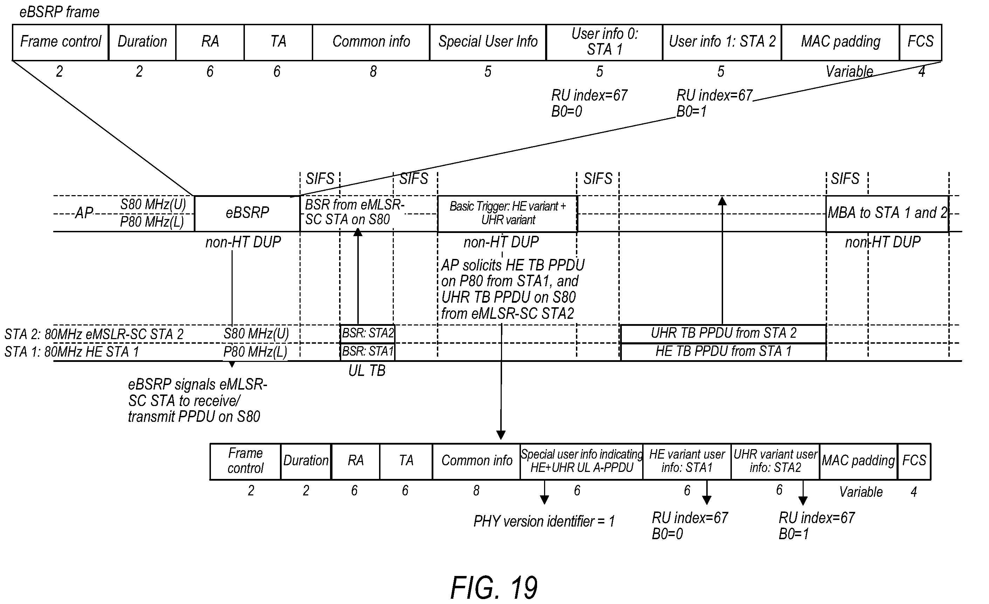

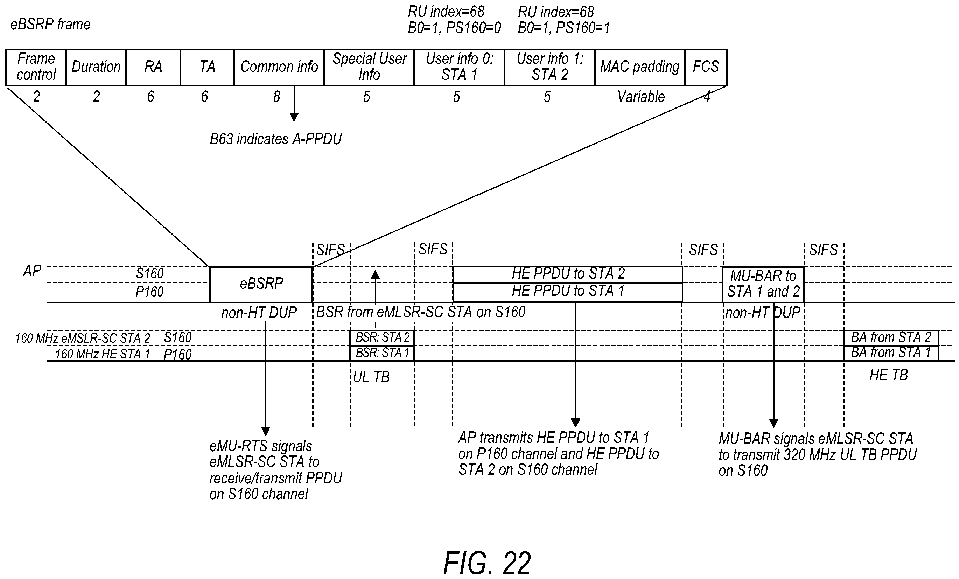

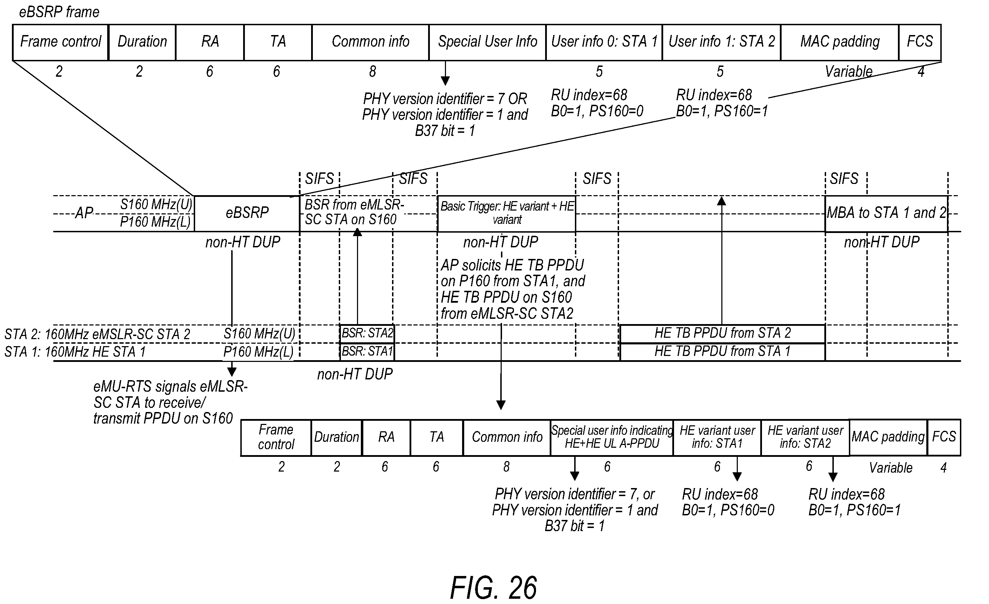

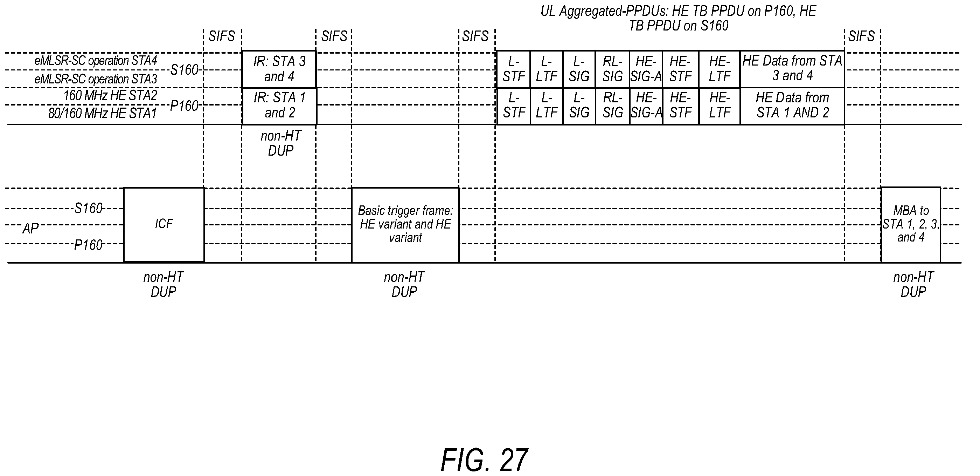

### Figures 6-27 and Additional Information

Figures 6-27 illustrate further aspects that might be used in conjunction with the methods of Figures 4-5 if desired. It should be noted, however, that the exemplary details illustrated in and described with respect to Figures 6-27 are not intended to be limiting to the disclosure as a whole: numerous variations and alternatives to the details provided herein below are possible and should be considered within the scope of the disclosure.

In IEEE 802.11 deployments, it may be the case that an AP can support a larger bandwidth than at least some STAs. For example, it may be the case that 802.11ax APs support 160 MHz bandwidth use, while non-AP STAs support up to 80 MHz bandwidth use. Utilizing the upper 80 MHz (secondary channel) provided by an AP may improve the quality of service (QoS) for a STA.

It may be possible to leverage enhanced multi-link single radio (EMLSR) to support STA operation on the secondary channel (SC). EMI,SR techniques may be supported in enhanced high throughput (EHT) systems, and may enable switching channels/bands based on an initial control frame (ICF). Thus, as shown in Figure 6, an ICF may be used to inform an EMLSR-SC operation / DSO capable STA to switch channel to the secondary channel. An initial response (IR) frame from the STA may indicate that the STA has switched channels, and is ready for downlink (DL) / uplink (UL) operation. It may be possible to use at least some existing EMLSR/DSO rules for such operation.

Multiple generations of Wi-Fi devices may be expected to coexist in many wireless communication systems. For example, "high efficiency" (HE, sometimes referred to as Wi-Fi 6) and "extremely high throughput" (EHT, sometimes referred to as Wi-Fi 7) devices may coexist with "ultra high reliability" (UHR, sometimes referred to as Wi-Fi 8) devices as IEEE 802.11 standard development continues. Such devices could include, for example 320 MHz Wi-Fi 8 AP/STAs, 160 MHz Wi-Fi 6/7/8 STAs, and 80 MHz Wi-Fi 6/7/8 STAs. If the bandwidth of HE or EHT STAs is smaller than the AP bandwidth, it may be possible that the secondary channel will be unused, which may result in a lower medium efficiency. For example, transmission between a Wi-Fi 8 AP and legacy STAs that only occupy partial BSS bandwidth may not fully utilize available frequency resources, resulting in lower efficiency, especially 80 MHz only HE STAs that do not support transmission and reception of 160 MHz physical layer protocol data units (PPDUs), or 80/160 MHz HE STAs are scheduled by an AP with 320 MHz operating bandwidth. On the other hand, a full BSS bandwidth transmission using legacy PPDU format to include both Wi-Fi 6 STAs and Wi-Fi 8 STAs may not fully utilize the capabilities of Wi-Fi 8 STAs (e.g., 4K QAM, MRU, UEQM, Longer length LDPC, UL BF), potentially resulting in lower efficiency and less scheduling flexibility.

However, it may be possible for EMI,SR-SC operation / DSO to be enhanced to allow HE/EHT and UHR STAs to share the entire AP bandwidth, for example including by multiplexing same or different generation PPDUs in one transmission. Such enhancement to EMI,SR-SC operation / DSO to enable an aggregated PPDU (A-PPDU) by leveraging EMI,SR-SC operations / DSO may thus potentially improve medium efficiency, throughput, and/or latency, as well as improve scheduling flexibility, and may allow for EMLSR-SC operation / DSO capable UHR STAs to be scheduled for a UHR PPDU or HE PPDU on the secondary channel, while allowing HE/EHT STAs with bandwidth less than the AP bandwidth to use the primary channel for an HE/EHT PPDU (e.g., even potentially including scheduling 80 MHz only HE STAs in a 160 MHz or 320 MHz A-PPDU).

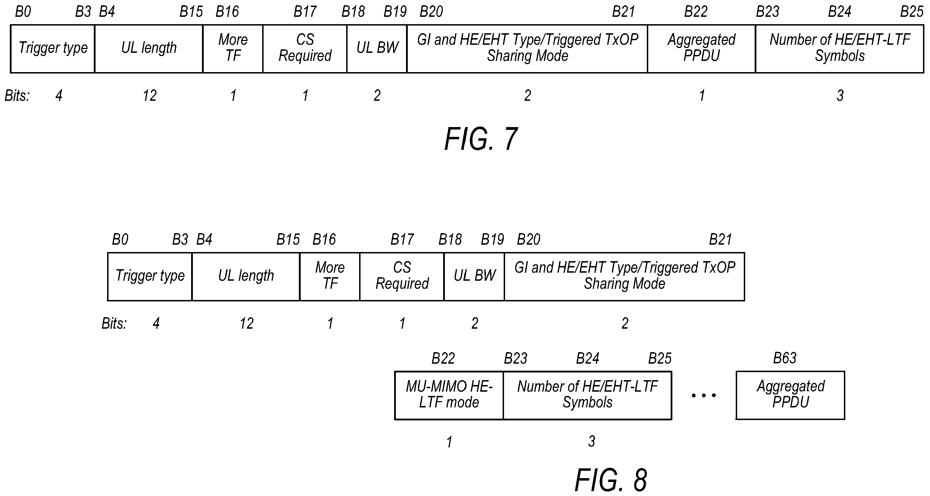

An initial control frame (ICF) such as enhanced multi-user request-to-send (eMU-RTS) frame or enhanced buffer status report poll (eBSRP) frame may be used to signal to an EMI,SR-SC operation / DSO capable STA whether it is participating in an OFDMA PPDU, or an A-PPDU transmission, on the assigned resource unit (RU) in the secondary channel. In the common info field of an MU-RTS frame, bit 22 (B22) is currently reserved. Accordingly, as one possibility, B22 in the eMU-RTS Common Info field could be defined as an "Aggregated PPDUs" subfield, with one value (e.g., 0, as one possibility) indicating that an EMLSR-SC STA is participating in a DL or UL OFDMA PPDU transmission, and the other value (e.g., 1, as one possibility) indicating that the EMLSR-SC STA is participating in a DL or UL A-PPDU transmission. Figure 7 illustrates aspects of one such possible frame format including an "Aggregated PPDU" subfield in B22, according to some embodiments. In the common info field of a trigger frame, bit 63 (B63) is currently reserved. Accordingly, as one possibility, B63 in eMU-RTS or eBSRP Common Info field could be defined as an "Aggregated PPDUs" subfield, with one value (e.g., 0, as one possibility) indicating that an EMI,SR-SC STA is participating in a DL or UL OFDMA PPDU transmission, and the other value (e.g., 1, as one possibility) indicating that the EMLSR-SC STA is participating in a DL or UL A-PPDU transmission. Figure 8 illustrates aspects of one such possible frame format including an "Aggregated PPDU" subfield in B63, according to some embodiments.

In the 802.11be specifications, it may be the case that it is not allowed to solicit an HE TB PPDU in a P80 channel and an EHT/UHR TB PPDU in a S80 channel in one transmission. In some embodiments, in order to be able to schedule a 80 MHz only HE STA on P80 channel for an HE PPDU and a EMI,SR-SC operation / DSO capable UHR STA on S80 channel for an EHT/UHR PPPDU, this rule may be applied if "Aggregated PPDUs" is indicated in eMU-RTS or eBSRP frame. Instead, the PPDU format used in the following DL or UL transmission for EMI,SR-SC operation / DSO capable STAs may be signaled in the "PHY version identifier" subfield in the Special User Info field. Note that the "Aggregated PPDU" signaling may not be needed if no HE STAs are included in the A-PPDU transmission, e.g., since it may be the case that 80/160 MHz EHT STAs must support 320 MHz PPDU transmission reception on P80/P160 channels, at least according to some embodiments.

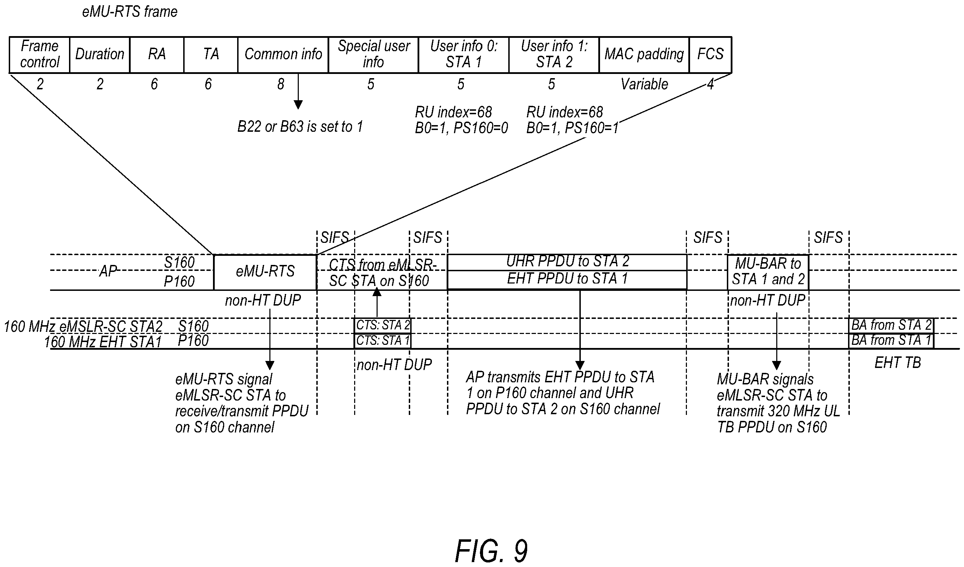

Figures 9-10 illustrate example details of a possible downlink A-PPDU transmission including a UHR format PPDU and an EHT format PPDU, according to some embodiments. In the illustrated example scenario, a forward compatible preamble design starting from 802.11be may be used, which may provide symbol alignment for EHT PPDU and future generation PPDUs. Allowing different USIG, EHT-SIG contents per 80 MHz channel may facilitate the possibility of multiplexing the different generation PPDUs in one transmission. An initial control frame such as an MU-RTS (eMU-RTS) or eBSRP frame may inform EMLSR-SC operation / DSO capable STA(s) to switch to the secondary channel and the transmission after the corresponding CTS or BSR frames may be scheduled for the A-PPDU. The signaling may be transparent to legacy devices. In an A-PPDU only including EHT STAs and future generation STAs, A-PPDU signaling may not be needed since the PPDU format may be determined by the "PHY Version Identifier" in USIG, e.g., instead of the Length field value in LSIG. EMI,SR-SC operation / DSO capable STAs may be able to determine DL MU PPDU format after decoding USIG.

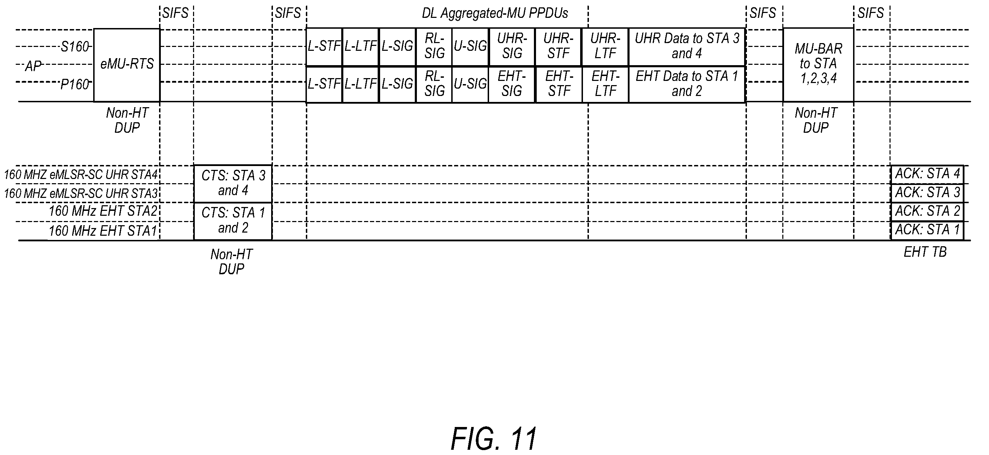

A 320 MHz Wi-Fi 8 AP may be able to generate one 320 MHz A-PPDU by setting the U-SIG bandwidth subfield value to 320 MHz, since U-SIG, EHT-SIG, and UHR-SIG contents can vary per 80 MHz channel and 80/160 MHz only EHT STAs must support reception and transmission of 320 MHz PPDU on primary 80/160 MHz channel, at least according to some embodiments. It may be the case that the number of OFDM symbols in EHT-SIG and UHR-SIG fields shall be the same, e.g., to ensure orthogonal transmissions between P160 and S160 channels. The same requirement may apply to EHT-LTF and UHR-LTF fields, as well as to EHT Data and UHR Data fields. Those requirements can be met by setting the same values for the following subfields: "Number of EHT-SIG/UHR-SIG Symbols" in U-SIG, "GI+LTF size," "Number of EHT-LTF," "Number of UHR-LTF Symbols," "LDPC Extra Symbol Segment," "Pre-FEC Padding Factor," and "PE Disambiguity" in EHT-SIG and UHR-SIG fields, respectively, at least according to some embodiments. Figure 11 illustrates further example format details of DL aggregated MU PPDUs in such an A-PPDU, according to some embodiments. In the illustrated example, 160 MHz only EHT STAs may be scheduled with EMI,SR-SC operation / DSO capable STAs. The AP may transmit 160 MHz EHT MU PPDU in the form of SU, OFDMA or MU-MIMO transmission in the P160 channel, and 160 MHz UHR MU PPDU in the form of SU, OFDMA or MU-MIMO transmission in the S160 channel.

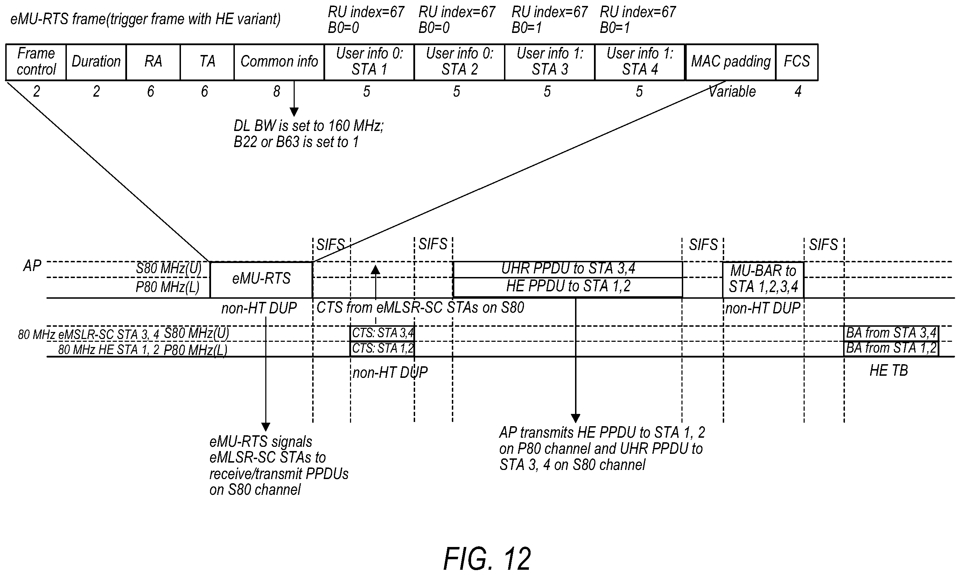

Figures 12-13 illustrate example details of a possible downlink A-PPDU transmission including a UHR MU PPDU and an HE MU PPDU, according to some embodiments. In the illustrated example scenario, it may be the case that the DL A-PPDU will not schedule HE SU PPDU and HE SU ER PPDU on the primary channel, e.g., due to the preamble symbol misalignment with EHT/UHR PPDU formats. If a Wi-Fi 8 AP schedules HE STAs on the primary channel in the A-PPDU, the AP may send an HE MU PPDU. The AP may need to generate two orthogonal PPDUs if one or more 80 MHz HE STAs do not support reception of 160 MHz HE MU PPDU on the P80 channel. Otherwise, the Wi-Fi 8 AP may be able to generate a 160 MHz A-PPDU. The Length field in L-SIG for the UHR MU PPDU may be set to the same value as that set in the HE MU PPDU (e.g., mod(length,3)=2, so that other 160/320 MHz wireless devices can decode the L-SIG correctly, and calculate the correct TXTIME. EMI,SR-SC operation / DSO capable STAs may bypass the PPDU format check using the Length field value in the L-SIG if "Aggregated PPDU" is set to 1 in the preceding eMU-RTS or eBSRP frame, and may instead determine the PPDU format based on the "PHY Version Identifier" field in USIG, at least according to some embodiments.

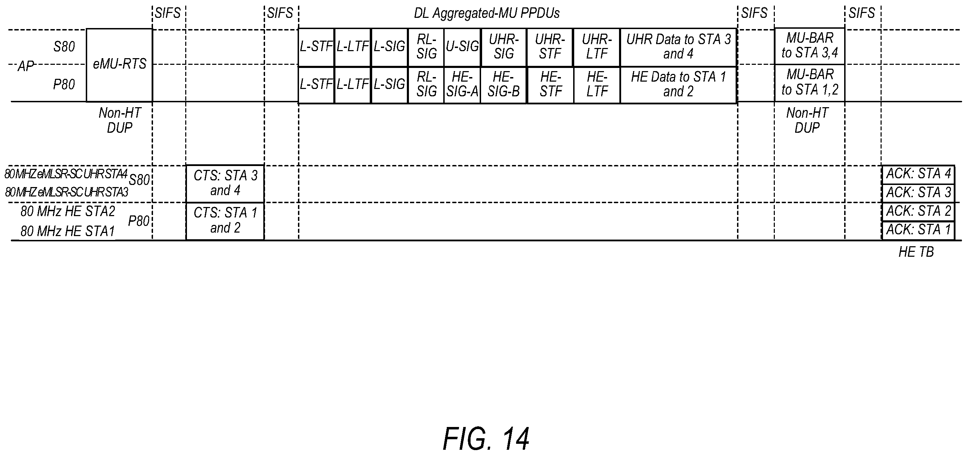

A Wi-Fi 8 AP may be able to generate one 160 MHz DL A-PPDU by setting the HE-SIG-A and U-SIG bandwidth subfield value to 160 MHz if all participating 80 MHz HE STAs support reception of 160 MHz HE MU PPDU on the P80 channel. The AP may need to generate two orthogonal PPDUs if one or more 80 MHz HE STAs do not support reception of 160 MHz HE MU PPDU on the P80 channel. The AP may set the bandwidth subfield in each of the HE-SIG-A and U-SIG fields to 80 MHz. HE STAs may only decode the HE-SIG-A and HE-SIG-B sent on the P80 channel, while EMLSR-SC operation / DSO capable STAs may only decode U-SIG and UHR-SIG sent on the S80 channel. The number of OFDM symbols in HE-SIG-B and UHR-SIG may be the same to ensure orthogonal transmissions between the P80 and S80 channels. The same requirement may apply to HE-LTF and UHR-LTF fields, as well as to HE Data and UHR Data fields. Those requirements can be met by setting the same values for the following subfields: "Number of HE-SIG-B Symbols" in HE-SIG-A and "Number of UHR-SIG Symbols" in U-SIG, "GI+LTF size," "Number of HE-LTF," "Number of UHR-LTF Symbols," "LDPC Extra Symbol Segment," "Pre-FEC Padding Factor," and "PE Disambiguity" in HE-SIG-A and UHR-SIG fields, respectively, at least according to some embodiments. Figure 14 illustrates further example format details of DL aggregated MU PPDUs in such an A-PPDU, according to some embodiments. In the illustrated example, 80 MHz HE STAs may be scheduled with EMI,SR-SC operation / DSO capable STAs. As previously discussed, the Length field in L-SIG for the UHR MU PPDU may be set to the same value as that set in HE MU PPDU, e.g., so that other 160/320 MHz devices can decode the length correctly if LSIG is combined over different 20 MHz channels, and calculate the correct TXTIME.

For UL A-PPDU, after receiving CTS or BSR frames from legacy STAs and EMI,SR-SC operation / DSO capable STAs in response to eMU-RTS or eBSRP transmission, an AP may send Trigger frames including HE/EHT/UHR variant user info fields (e.g., depending on the STAs involved) to the HE/EHT STAs and eMI,SR-SC operation / DSO capable UHR STAs to solicit the UL A-PPDU. To solicit a 160/320 MHz UL A-PPDU including HE STAs, a UHR AP may send a trigger frame with UL bandwidth set to 80/160 MHz including HE variant user info fields associated with STAs assigned on the primary channel, and UHR variant user info fields associated with STAs assigned on the secondary channel, if the "Aggregated PPDUs" is set to 1 in the preceding eMU-RTS or eBSRP frame. To solicit a 160/320 MHz UL A-PPDU including 80/160 MHz only EHT STAs, a UHR AP may send a trigger frame including EHT variant user info fields associated with STAs assigned on the P80/P160 channel, and UHR variant user info fields associated with STAs assigned on secondary channels. To solicit a 160/320 MHz UL A-PPDU including - HE STAs, a UHR AP may send one trigger frame, with UL bandwidth set to 80/160 MHz, including HE variant user info fields associated with STAs assigned on the primary channel, and HE variant user info fields associated with STAs assigned on the secondary channel, if both "Aggregated PPDUs" and "Same PPDU formats" (either Special user info field B37 or common info field B56) are set to 1 in the preceding eMU-RTS or eBSRP frame. Symbol aligned UL TB PPDU formats may allow a Wi-Fi 8 AP to trigger synchronized mixed-generation UL TB PPDUs from legacy STAs and eMLSR-SC capable STAs in one transmission. Each individual UL TB PPDU can be in the form of SU, OFDMA, or MU-MIMO transmission, at least according to some embodiments. The UL length in the trigger frame common info field may be set according to HE TB PPDU calculation, e.g., as stated in 802.11be specifications if HE STAs are included in the A-PPDU. If the "Aggregated PPDU" is set to 1 in the eMU-RTS or eBSRP frame, the Length field in the L-SIG of UHR TB PPDU on the S80 channel may be set to the same value as the HE TB PPDU if one or more HE STAs are scheduled in the A-PPDU (e.g., as indicated using signaling in the UHR basic trigger frame common info), i.e., mod(length, 3)=1, so that L-SIG decoding is not affected if other 160/320 MHz devices are combining the preambles for decoding.

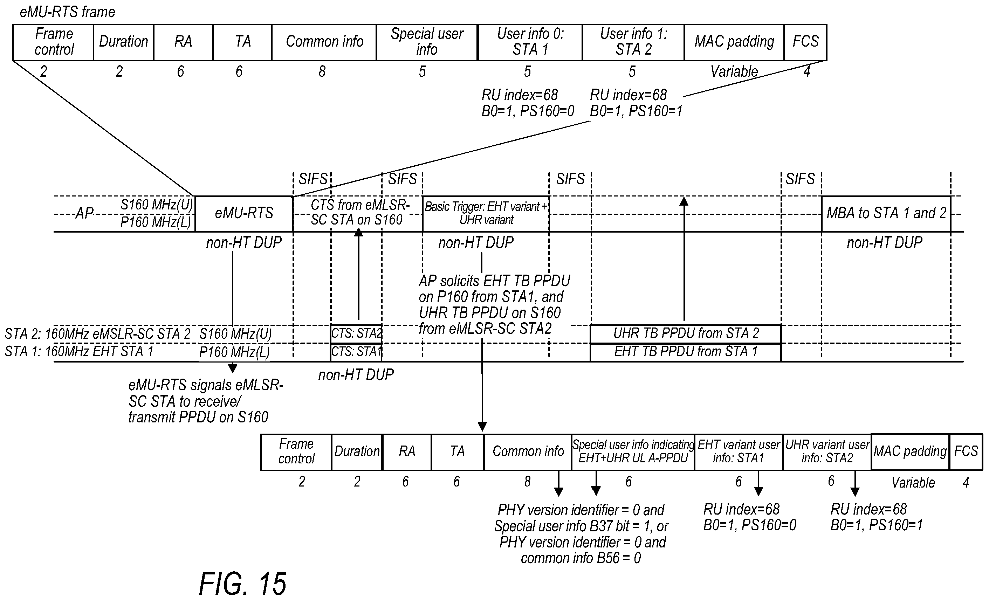

Figures 15-16 illustrate example details of a possible uplink A-PPDU transmission including a UHR format PPDU and an EHT format PPDU, according to some embodiments. In the illustrated example scenario, a 320 MHz Wi-Fi 8 AP may trigger a 160 MHz EHT TB PPDU from EHT STA 1 on the P160 channel, and a 160 MHz UHR TB PPDU from eMLSR-SC operation / DSO capable STA 2 on the S160 channel. Note that the AP may be able to trigger more STAs to transmit UL OFDMA or UL MU-MIMO TB PPDU on the P160 and/or S160 channels. For simplicity of understanding, the illustrated example shows only one STA being triggered in each of the P160 and S160 channels. In some embodiments, the trigger frame to solicit such an UL EHT+UHR TB PPDU can include setting common Info field B54, B55 to 0, and setting special user info "PHY version identifier" to 0, e.g., for backward compatibility with EHT STAs. If UL BW is set to 160 MHz, User info field B39 set to 0 can indicate EHT TB PPDU. For UHR TB PPDU indication, it can be possible that both common info B56 set to 0 and User info field B39 set to 1 indicates UHR TB PPDU, or that special user info reserved bit B37 set to 1 and User info field B39 set to 1 indicates UHR TB PPDU, according to various embodiments. If UL BW is set to 80 MHz, User info field B12 bit (B0 bit of RU allocation subfield) set to 0 can indicate EHT TB PPDU. For UHR TB PPDU indication, it can be possible that common info B56 set to 0 and User info field B12 bit (B0 bit of RU allocation subfield) set to 1 indicates UHR TB PPDU, or that special user info reserved bit B37 set to 1 and User info field B12 set to 1 indicates UHR TB PPDU, according to various embodiments.

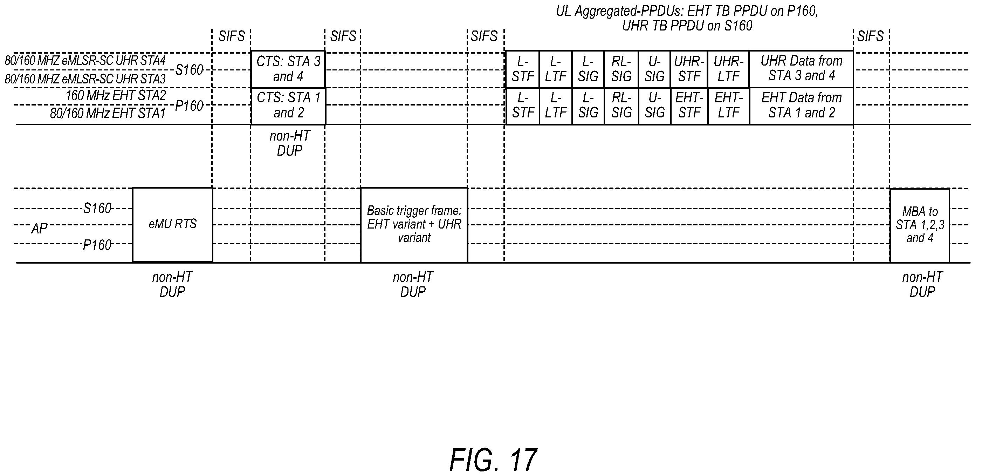

Figure 17 illustrates further possible frame details for an example scenario in which uplink A-PPDU transmission is performed including a UHR format PPDU and an EHT format PPDU, according to some embodiments. As shown, multiple EHT and UHR STAs may be involved in the uplink A-PPDU in this example. In the illustrated scenario, if EHT STA 1 is an 80 MHz only STA, an EHT UL OFDMA PPDU may be triggered on the P160 channel, otherwise either EHT UL OFDMA or MU-MIMO PPDU can be triggered on the P160 channel. If one of the EMI,SR-SC operation / DSO capable STAs is an 80 MHz only STA, a UHR UL OFDMA PPDU may be triggered on the S160 channel, otherwise either UHR SU, UL OFDMA or MU-MIMO PPDU may be triggered on the S160 channel. At least in some instances, it may be specified that the number of OFDM symbols in the UHR-LTF and EHT-LTF fields, and the number of OFDM symbols in UHR Data and EHT Data fields shall be the same, which may be achieved by sharing the same values in the following subfields of trigger frame common info fields: "Trigger type," "UL Length," "GI and HE/EHT/UHR-LTF Type," "Number of HE/EHT/UHR-LTF symbols," LDPC Extra Symbol Segment," "Pre-FEC Padding Factor," and "PE Disambiguity."

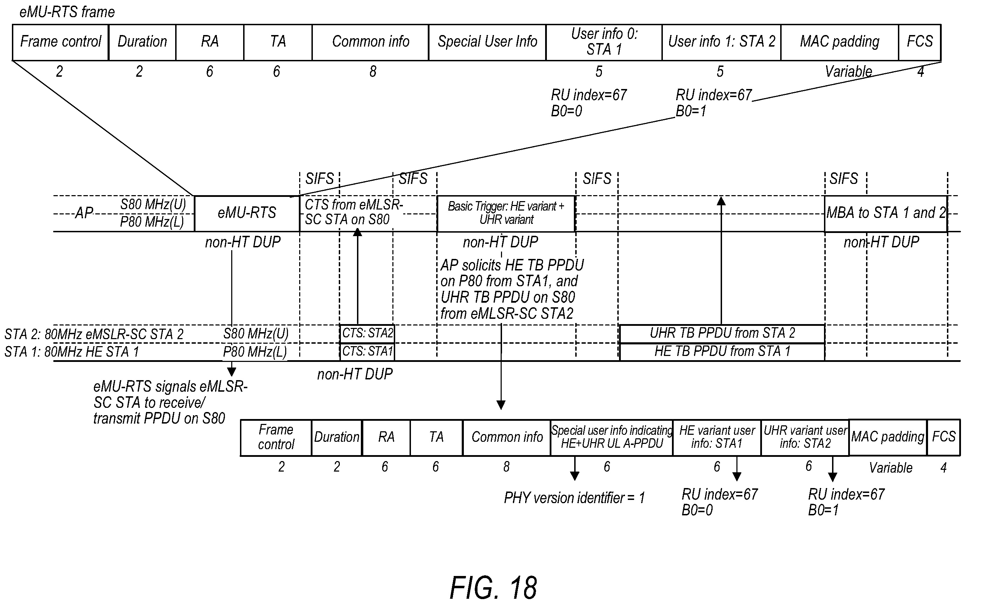

Figures 18-19 illustrate example details of a possible uplink A-PPDU transmission including a UHR format PPDU and an HE format PPDU, according to some embodiments. In the illustrated example scenario, if the UL A-PPDU includes 80 MHz only HE STAs that do not support 160 MHz HE TB PPDU transmission, UL bandwidth may be set to 80 MHz in the Basic Trigger frame. If the UL A-PPDU includes 80 MHz only HE STAs that all support 160 MHz HE TB PPDU transmission, the UL bandwidth may be set to 160 MHz in Basic Trigger frames. In some embodiments, the trigger frame to solicit such an UL HE+UHR TB PPDU can include setting common Info field B54 to 1 and B55 to 0. If UL BW is set to 160 MHz, User info field "PS160" subfield set to 0 can indicate HE TB PPDU. Both User info field "PS 160" subfield and special user info "PHY version identifier" subfield set to 1 can indicate UHR TB PPDU. If UL BW is set to 80 MHz, User info field B12 bit (B0 bit of RU allocation subfield) set to 0 can indicate HE TB PPDU, while B12 bit set to 1 and special user info "PHY version identifier" subfield set to 1 can indicate UHR TB PPDU. For both DL and UL HE+UHR A-PPDU transmission, it can be the case that the "LENGTH" field in LSIG for UHR PPDU needs to be set to the same value as in the HE PPDU, as described herein.

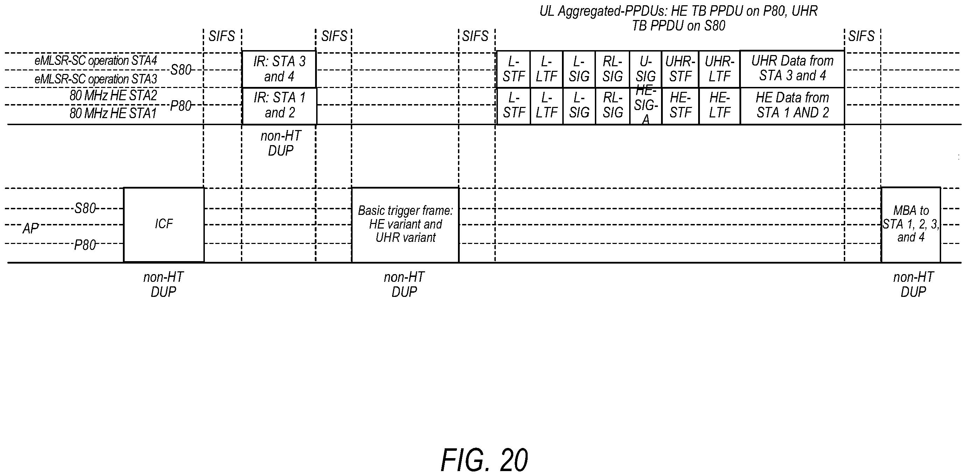

Figure 20 illustrates further possible frame details for an example scenario in which uplink A-PPDU transmission is performed including a UHR format PPDU and an HE format PPDU, according to some embodiments. At least in some instances, it may be specified that the number of OFDM symbols in the UHR-LTF and HE-LTF fields shall be the same, and the same requirement may apply to the UHR Data and HE data fields. The requirements may be met by sharing the same values in the following subfields in trigger frame common info fields: "Trigger type," "UL Length," "GI and HE/UHR-LTF Type," "Number of HE/UHR-LTF symbols," "LDPC Extra Symbol Segment," "Pre-FEC Padding factor," and "PE Disambiguity," according to some embodiments.

In some embodiments, a DL or UL A-PPDU can include multiple HE PPDUs, for example for scenarios with HE and/or EHT STA(s) on the primary channel and UHRDSO capable STA(s) on the secondary channel. One such scenario can include one or more 80 MHz only HE STAs (e.g., which do not support 160 MHz DL and UL OFDMA PPDU), and potentially 80/160 MHz EHT STAs, on P80 of a 160 MHz operating bandwidth AP in 5/6 GHz band, and UHR DSO capable STA(s) on S80. In this case, 80 MHz HE PPDU + 80 MHz HE PPDU A-PPDU DL/UL transmission may be used under the conditions that the preamble fields and data fields are aligned. The PHY throughput gain of such 160 MHz FD A-PPDU operation over 80 MHz HE PPDU can potentially be doubled (e.g., due to twice the bandwidth usage). HE SU PPDU + HE SU PPDU transmission can be possible. This can result in significant improvement on packet latency observed by STAs.

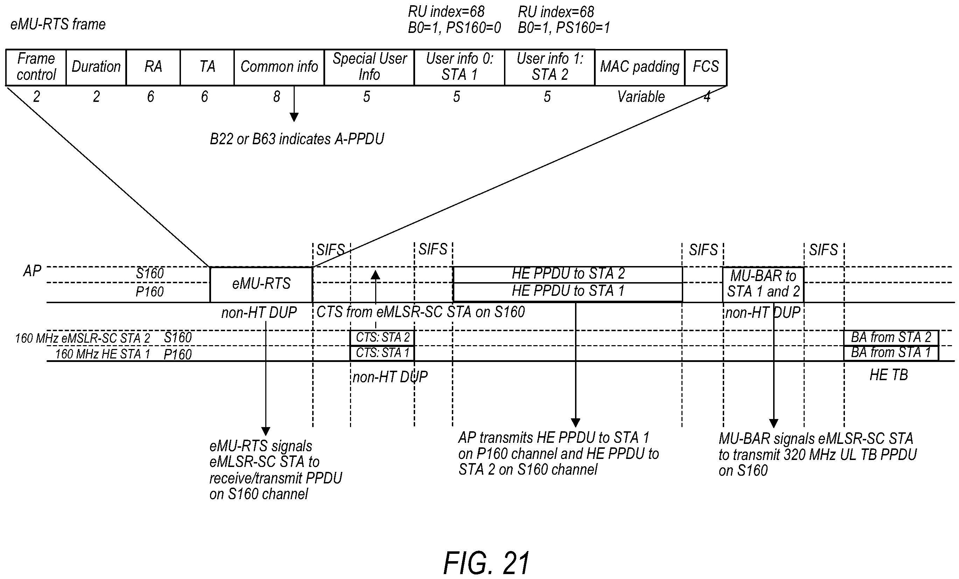

Figures 21-22 illustrate example details of a possible downlink A-PPDU transmission including an 160 MHz HE PPDU and an 160 MHz HE MU PPDU, according to some embodiments. Such a scenario can include one or more 160 MHz HE STAs on P160 of a 320 MHz operating bandwidth AP in 6 GHz band, and UHR DSO capable STA(s) on S160. In this case, 160 MHz HE PPDU + 160 MHz HE PPDU A-PPDU DL/UL transmission may be used, at least in some instances. Similar to the previous example, the PHY throughput gain of such 320 MHz FD A-PPDU operation over 160 MHz HE PPDU can potentially be doubled (e.g., due to twice the bandwidth usage). HE SU PPDU + HE SU PPDU transmission can be possible. This can also result in significant improvement on packet latency observed by STAs.

Still another such scenario can include one or more 80 MHz HE STAs supporting transmit/receive of 160 MHz HE OFDMA PPDU on P80 of a 320 MHz operating bandwidth AP in 6 GHz band, and UHR DSO capable STA(s) on S80 and S160. In this case, 160 MHz HE MU/TB PPDU + 160 MHz HE MU/TB PPDU A-PPDU DL/UL transmission may be used, at least in some instances. Similar to the previous examples, the PHY throughput gain of such 320 MHz FD A-PPDU operation over 160 MHz HE PPDU can potentially be doubled (e.g., due to twice the bandwidth usage). This can also result in significant improvement on packet latency observed by STAs.

Yet another such scenario can include one or more 80 MHz HE STAs not supporting transmit/receive of 160 MHz HE OFDMA PPDU on P80 of a 320 MHz operating bandwidth AP in 6 GHz band, and UHR DSO capable STA(s) on S80 and S160. In this case, 80 MHz HE PPDU + 80 MHz HE PPDU + 160 MHz HE PPDU A-PPDU DL/UL transmission may be used, at least in some instances. The PHY throughput gain of such 320 MHz FD A-PPDU operation over 80 MHz HE PPDU can potentially be quadrupled (e.g., due to four times the bandwidth usage). This can also result in significant improvement on packet latency observed by STAs.

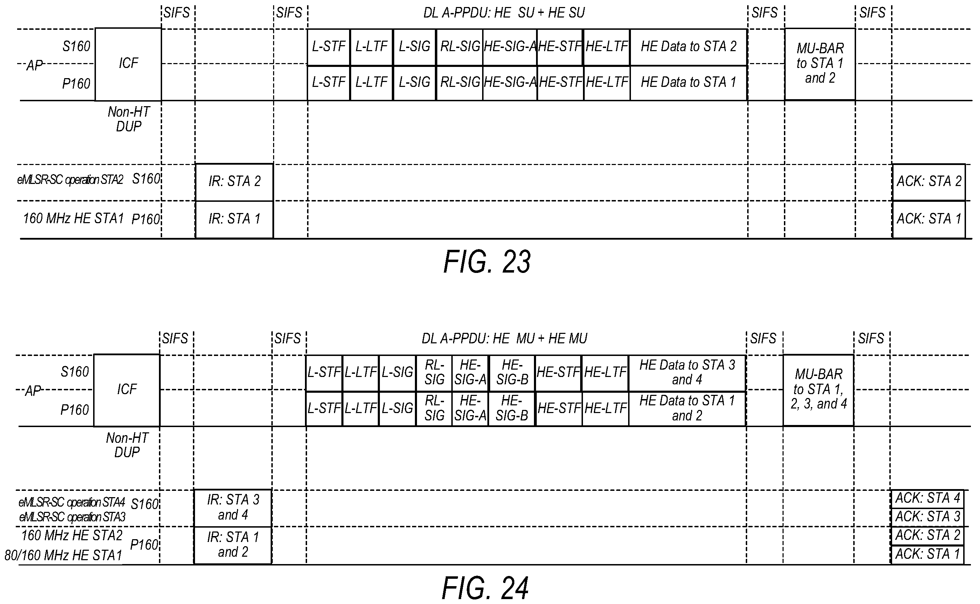

Preamble field and data field alignment may still be needed to aggregate the multiple HE PPDUs. Figures 23-24 illustrate further example format details of DL aggregated SU and MU PPDUs in such an A-PPDU, according to some embodiments.

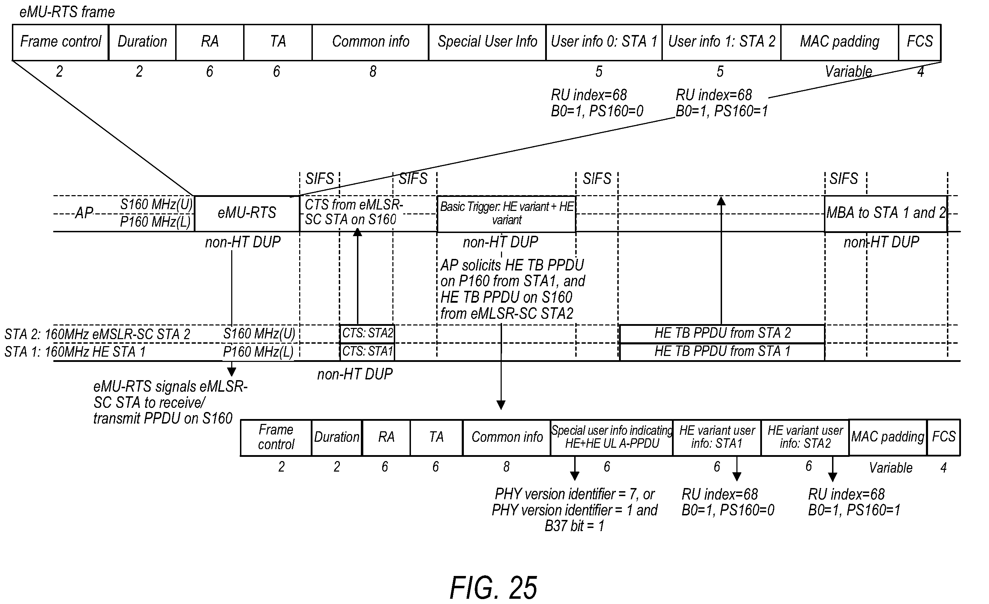

Figures 25-27 illustrate example details of possible uplink A-PPDU transmission operation including an HE format PPDU and an HE format PPDU, according to some embodiments. In the illustrated example scenarios, UL bandwidth may be set to 160 MHz in the Basic Trigger frame. In some embodiments, the trigger frame to solicit such an UL HE+HE TB PPDU can include setting common Info field B54 to 1 and B55 to 0. In the special user info field, "PHY Version Identifier" can be 7 to indicate it is HE+HE TB A-PPDU, or "PHY Version Identifier" set to 1 plus reserved bit B37 set to 1 can indicate that it is HE+HE TB A-PPDU, in various embodiments.

Thus, A-PPDU uses supporting mixed HE/EHT/UHR PPDUs or same HE+HE PPDUs in one transmission may be possible using the techniques described herein. This may make scheduling mixed generation devices very flexible without sacrificing advanced features of the newer generation devices, at least according to some embodiments. In some instances, such A-PPDU transmission may be supported with EMI,SR-SC operation / DSO capable STAs with certain IEEE 802.11 standard changes. These possible changes could include in an initial control frame such as eMU-RTS or eBSRP frame, adding an "Aggregated PPDUs" subfield (e.g., 1 bit) in the common info field to indicate whether the following transmission is an A-PPDU transmission or OFDMA PPDU over secondary channels. If HE STAs are scheduled in an A-PPDU, the "LENGTH" value in the UHR PPDU L-SIG field may be set to the same as that in the HE PPDU, e.g., so that other Wi-Fi devices can decode the "LENGTH" correctly if the L-SIG is combined over different 20 MHz channels. For DL A-PPDU reception, an EMLSR-SC operation / DSO capable STA may be expected to bypass PPDU format check using the "LENGTH" value in the L-SIG field and continue to decode the U-SIG to determine the PPDU format. For UL A-PPDU transmission, an EMI,SR-SC operation / DSO capable STA may be expected to set the "LENGTH" value in the UHR TB PPDU L-SIG field to the same as that in the HE TB PPDU if one or more HE STAs is scheduled in the A-PPDU.

It is well understood that the use of personally identifiable information should follow privacy policies and practices that are generally recognized as meeting or exceeding industry or governmental requirements for maintaining the privacy of users. In particular, personally identifiable information data should be managed and handled so as to minimize risks of unintentional or unauthorized access or use, and the nature of authorized use should be clearly indicated to users.

In addition to the above-described exemplary embodiments, further embodiments of the present disclosure may be realized in any of various forms. For example, some embodiments may be realized as a computer-implemented method, a computer-readable memory medium, or a computer system. Other embodiments may be realized using one or more custom-designed hardware devices such as ASICs. Still other embodiments may be realized using one or more programmable hardware elements such as FPGAs.

In some embodiments, a non-transitory computer-readable memory medium may be configured so that it stores program instructions and/or data, where the program instructions, if executed by a computer system, cause the computer system to perform a method, e.g., any of the method embodiments described herein, or, any combination of the method embodiments described herein, or, any subset of any of the method embodiments described herein, or, any combination of such subsets.

In some embodiments, a device (e.g., an AP 104 or a UE 106) may be configured to include a processor (or a set of processors) and a memory medium, where the memory medium stores program instructions, where the processor is configured to read and execute the program instructions from the memory medium, where the program instructions are executable to implement any of the various method embodiments described herein (or, any combination of the method embodiments described herein, or, any subset of any of the method embodiments described herein, or, any combination of such subsets). The device may be realized in any of various forms.

Although the embodiments above have been described in considerable detail, numerous variations and modifications will become apparent to those skilled in the art once the above disclosure is fully appreciated. It is intended that the following claims be interpreted to embrace all such variations and modifications.

## Claims

1. A method, comprising:
transmitting a downlink aggregated physical layer protocol data unit (A-PPDU) that comprises multiple frequency domain multiplexed PPDUs.

2. The method of claim 1,
wherein the downlink A-PPDU occupies a frequency channel that comprises a primary subchannel and a secondary subchannel, wherein a first PPDU having a first PPDU format is transmitted on the primary subchannel, wherein a second PPDU having a second PPDU format is transmitted on the secondary subchannel.

3. The method of claim 2,
wherein the first PPDU is transmitted to one or more wireless devices with smaller bandwidth capability than a bandwidth of the frequency channel occupied by the downlink A-PPDU,
wherein the second PPDU is transmitted to one or more enhanced multi-link single radio secondary channel (eMI,SR-SC) operation or dynamic subband operation (DSO) capable wireless devices with smaller bandwidth capability than a bandwidth of the frequency channel occupied by the downlink A-PPDU.

4. The method of claim 2,
wherein the first PPDU format comprises one of a Wi-Fi high efficiency (HE) or Wi-Fi extremely high throughput (EHT) format,
wherein the second PPDU format comprises one of a Wi-Fi HE format or a Wi-Fi ultra high reliability (UHR) format.

5. The method of any of the preceding claims, wherein the method further comprises:
transmitting an initial control frame (ICF) for the downlink A-PPDU that indicates that the downlink A-PPDU comprises multiple frequency domain multiplexed PPDUs.

6. The method of claim 5,
wherein the ICF for the downlink A-PPDU comprises an enhanced multi-user request to send (eMU-RTS) frame or an enhanced buffer status report poll (eBSRP) frame.

7. The method of claim 6,
wherein the eMU-RTS or eBSRP frame indicates that the downlink A-PPDU comprises multiple frequency domain multiplexed PPDUs using an "Aggregated PPDU" subfield of a "Common Info" field of the eMU-RTS or eBSRP frame.

8. The method of any of the preceding claims, wherein the method further comprises:
transmitting an aggregated trigger frame that includes multiple trigger frame formats; and
receiving, in response to the aggregated trigger frame, an uplink A-PPDU that comprises multiple frequency domain multiplexed PPDUs.

9. A computer program comprising instructions for performing any of the methods of claims 1-8.

10. An apparatus, comprising:
a processor; and
a non-transitory memory element storing instructions executable by the processor to cause a wireless device to:
receive an initial control frame (ICF) for a downlink aggregated physical layer protocol data unit (A-PPDU) that comprises multiple frequency domain multiplexed PPDUs;
determine a resource assignment for the wireless device in the downlink A-PPDU using the ICF for the downlink A-PPDU; and
receive at least a portion of the downlink A-PPDU using the resource assignment for the wireless device.

11. The apparatus of claim 10,
wherein the downlink A-PPDU occupies a frequency channel that includes a primary subchannel and a secondary subchannel, wherein a first PPDU having a first PPDU format occupies the primary subchannel, wherein a second PPDU having a second PPDU format occupies the secondary subchannel.

12. The apparatus of claim 11,
wherein the first PPDU format comprises one of a Wi-Fi high efficiency (HE) or Wi-Fi extremely high throughput (EHT) format,
wherein the second PPDU format comprises a Wi-Fi HE or Wi-Fi ultra high reliability (UHR) format.

13. The apparatus of any of claims 10-12,
wherein the ICF for the downlink A-PPDU comprises an enhanced multi-user request to send (eMU-RTS) frame or an enhanced buffer status report poll (eBSRP) frame that indicates that the downlink A-PPDU comprises multiple frequency domain multiplexed PPDUs.

14. The apparatus of claim 13,
wherein the eMU-RTS or eBSRP frame indicates that the downlink A-PPDU comprises multiple frequency domain multiplexed PPDUs using an "Aggregated PPDU" subfield of a "Common Info" field of the eMU-RTS or eBSRP frame.

15. The apparatus of any of claims 10-14, wherein the instructions are further executable by the processor to:
receive an ICF for an uplink A-PPDU that comprises multiple frequency domain multiplexed PPDUs;
determine a resource assignment for the wireless device in the uplink A-PPDU using the ICF for the uplink A-PPDU
receive a trigger frame for the uplink A-PPDU using the resource assignment for the wireless device; and
transmit a portion of the uplink A-PPDU using the resource assignment for the wireless device.
